# EUROPEAN PATENT APPLICATION

(11) **EP 2 312 542 A1**
(43) Date of publication of application: **20.04.2011**
(21) Application number: 10187360.2
(22) Date of filing: 13.10.2010
(51) Int. Cl.: G07G 3/00, G08B 13/00

(54) **Information processing device, information processing system, control method for an information processing device, and a program**

(30) Priority: 14.10.2009 JP 2009237094; 15.10.2009 JP 2009237993
(71) Applicant: Seiko Epson Corporation, Tokyo 163-0811 (JP)
(72) Inventor: Yoshizawa, Junichi, Nagano 392-8502 (JP); Aonuma, Masashi, Nagano 392-8502 (JP); Nakamura, Jinichi, Nagano 392-8502 (JP); Hama, Takashi, Nagano 392-8502 (JP)
(74) Representative: MERH-IP Matias Erny Reichl Hoffmann

(57) **Abstract**

An information processing device, an information processing system, a control method for an information processing device, and a program can detect POS terminal operations without modifying the POS terminal (1). An output data acquisition unit (21) acquires output data that is output from a POS terminal (1). An operation determination unit (22) evaluates the operation of the POS terminal (1) based on the acquired output data. A data conversion unit (23) converts the result from the operation determination unit (22) to data in a specific format that can be interpreted by a store management server (5). A converted data output unit (24) outputs the converted data converted by the data conversion unit (23) to the store management server (5).

## Description

### BACKGROUND

### 1. Technical Field

The present invention relates to an information processing device, an information processing system, a control method for an information processing device, and a program for detecting fraudulent or improper activity by employees or customers in a supermarket or other type of retail store, or in a family restaurant or other type of restaurant.

### 2. Related Art

Systems designed to detect fraudulent activities by employees while processing transactions in stores and restaurants are known from the literature. See, for example, Japanese Unexamined Patent Appl. Pub. JP-A-2005-115504.
The system taught in JP-A-2005-115504 includes a POS (point of sale) terminal, a camera focused on the POS terminal surroundings, a photojournal recorder, and a search terminal. A photojournal recorder records journal data (transaction history data), image data captured by the camera showing the POS terminal and surroundings, and a history of POS terminal operation by the employee (operating history data). By specifying specific search conditions such as the time and POS terminal operations using a search terminal, an administrator (operator) can retrieve and display the journal data and the image data matching the search criteria.

The system taught in JP-A-2005-115504, however, only displays a list of the recorded data (content of the transaction process and images captured at that time) matching the search criteria specified by the administrator, and in order to detect if there was any fraudulent or improper activity during that transaction process, the administrator must check the individually recorded data. This means that the administrator cannot determine if there was fraudulent or improper activity without actively and independently initiating the search process and verifying the recorded data returned as the search result, and detecting fraudulent or improper activity therefore requires significant time and effort.

Exception processes executed on the POS terminal could conceivably be automatically detected to extract the recorded data for possibly fraudulent or improper transactions. Exception processes are commonly abused as an opportunity for fraudulent activity. For example, a receipt not taken by a customer could be used to execute a cancellation process, which is one type of exception process, and fraudulently pocket an amount of cash equal to the transaction amount of the receipt, and detecting cancellation processes as possible fraudulent activity enables reducing the recorded data to be examined. Alternatively, if instead of searching for recorded data after a process is completed some type of warning is issued whenever an exception process is detected, fraudulent activity can be efficiently and quickly detected by inspecting the captured images in real time.

However, modification of the POS terminal is required in order to enable detecting such cancellation processes and other exception processes. More specifically, specifications must be changed or the POS terminal itself must be replaced in order to output exception process data from the POS application. The cost of introducing such an exception process detection function is therefore a burden for the retailer or other business.

### SUMMARY

An information processing device, an information processing system, a control method for an information processing device, and a program according to the present invention enable detecting POS terminal operations without modifying the POS terminal.

A first aspect of the invention is an information processing device including an output data acquisition unit adapted to acquire output data output from a POS terminal; an operation evaluation unit adapted to determine the POS terminal operation based on the acquired output data; a data conversion unit adapted to convert the result of the operation evaluation unit to data in a specific format that can be interpreted by an external device; and a converted data output unit adapted to output the converted data converted by the data conversion unit to the external device.

Another aspect of the invention is a control method for an information processing device that is used connected to a POS terminal and an external device, including as steps executed by the information processing device: an output data acquisition step that acquires output data output from a POS terminal; an operation evaluation step that determines the POS terminal operation based on the acquired output data; a data conversion step that converts the result of the operation evaluation step to data in a specific format that can be interpreted by the external device; and a converted data output step that outputs the converted data converted by the data conversion step to the external device.

In an information processing device according to another aspect of the invention, the operation evaluation unit is adapted to reference a conversion table that can be rewritten according to the POS terminal specification to determine the POS terminal operation.

With this aspect of the invention the POS terminal operation can be determined by an external device without modifying the POS terminal because the information processing device used connected to a POS terminal determines the POS terminal operation based on output data output from the POS terminal, and outputs the result of this decision to an external device. Because there is therefore no need to change the POS application, the cost to the retailer of adding a function for detecting POS terminal operations can be reduced.
Furthermore, while the file format generally differs according to the POS application, the information processing device (information processing device control method) of the invention enables referencing a table that can be rewritten according to the POS terminal specification, and can thereby determine the POS terminal operation regardless of file format. More specifically, the invention can be adapted to a wide range of POS systems by appropriately rewriting the conversion table, and the general utility of the information processing device can be improved.

In an information processing device according to another aspect of the invention, at least some of the output data is print data for issuing a receipt; and the information processing device also has a print unit for printing the print data on paper.

This aspect of the invention enables applying the information processing device and the information processing device control method of the invention to a receipt printer.

In an information processing device according to another aspect of the invention, at least some of the output data is display data for a customer display; and the information processing device also has a display data output unit adapted to output the display data on the customer display.

This aspect of the invention enables determining the POS terminal operation based on display data output from the POS terminal for a customer display.

In an information processing device according to another aspect of the invention, the operation evaluation unit is adapted to determine if the POS terminal operation is an operation for executing an exception process of a transaction process; and the converted data output unit is adapted to output exception process information related to the exception process as the converted data when the operation evaluation unit determines that the POS terminal operation was an operation for executing an exception process.

This aspect of the invention can detect exception processes executed by the POS terminal, and can output exception process information indicating that an exception process was executed to an external device. The output exception process information can be used for employee training, understanding customer interactions, and detecting fraudulent or improper activity, for example.

In an information processing device according to another aspect of the invention, an imaging result acquisition unit that is adapted to acquire imaging results from an imaging device for imaging a checkout counter area where the POS terminal is installed; wherein the converted data output unit is adapted to output imaging results from the imaging device captured during a specified time before and/or after the decision by the operation evaluation unit when the operation evaluation unit determines that the POS terminal operation was an operation for executing an exception process.

This aspect of the invention enables using the imaging results from the checkout counter area during an exception process for employee training, understanding customer interactions, and detecting fraudulent or improper activity, for example.
Note that the specified time before or after the decision by the operation evaluation unit may be a specific period of time that starts and ends before the evaluation by the operation evaluation unit, a specific time that starts before the evaluation by the operation evaluation unit and ends after the evaluation by the operation evaluation unit, or a specific period of time that starts and ends after the evaluation by the operation evaluation unit.

Yet further preferably in an information processing device according to another aspect of the invention, the operation evaluation unit is adapted to determine the exception process type; wherein said specified time is determined according to the exception process type.

Because the imaging time is determined according to the type of exception process in this aspect of the invention, imaging results suitable to the type of exception process can be output.
Note that the start and end points of the specified time before or after may be determined instead of the length of the specified time before or after according to the type of exception process.

Further preferably in an information processing device according to another aspect of the invention, the operation evaluation unit is adapted to determine the transaction amount of the exception process; wherein said specified time is determined according to the transaction amount of the exception process.

Because this aspect of the invention determines the imaging time according to the transaction amount of the exception process, imaging results suitable to the transaction amount of the exception process can be output (such as imaging results with an imaging time that increases as the transaction amount increases).
Note that the start and end points of the specified time before or after may be determined instead of the length of the specified time before or after according to the type of exception process.

Yet further preferably in an information processing device according to another aspect of the invention, the external device has a database that relationally stores the exception process information and the imaging results from the imaging device.

This aspect of the invention can store the exception process information and the imaging results from the imaging device in a database. Furthermore, because this information is linked together, the recorded data can be searched using the type of exception process or date and time of the image as the search key.

Another aspect of the invention is an use of the information processing device above in an information processing system comprising the information processing device and an external device, wherein: the operation evaluation unit includes an employee/customer determination unit that is adapted to evaluate at least one of an employee operating the POS terminal and a customer of a transaction process of the POS terminal; and the external device includes an exception process-related information recording unit that is adapted to generate and record in a database exception process-related information that relates an employee ID of the employee or a customer ID of the customer evaluated by the employee/customer determination unit and specific parameters including the exception process type when information indicating an exception process of the transaction process is contained in the converted data acquired from the information processing device, and a history information output unit that is adapted to summarize and output the exception process-related information stored in the database by employee ID or customer ID as history information.

This aspect of the invention records exception process-related information correlating employee IDs or customer IDs to specific parameters related to the exception process in a database, and summarizes and outputs the exception process-related information by employee ID or customer ID, and thereby enables easily and quickly determining fraudulent or improper activity by an employee or customer from the summarized history information. More specifically, an administrator can check based on the output history information what types and the number of exception processes an employee or customer was previously involved in, and can thereby objectively determine if there was fraudulent or improper activity.

In an use according to another aspect of the invention, the external device further includes a search key specification unit that is adapted to specify as a search key at least one of the employee ID, the customer ID, the exception process type, a date and time of the exception process, an exception process number, a product processed in the exception process, the presence of a customer at the checkout counter where the POS terminal is located, and employee location, and an exception process-related information extraction unit that is adapted to extract from the database the exception process-related information matching the specified search key; and the history information output unit is adapted to summarize the exception process-related information extracted by the exception process-related information extraction unit and output the history information.

This aspect of the invention enables extracting exception process-related information matching a specific search key from the database, summarizing the extracted exception process-related information, and outputting history information. As a result, the administrator can easily acquire the necessary history information.

In an use according to another aspect of the invention, the external device also has a fraud evaluation unit that is adapted to determine the possibility of fraud by at least one of the employee and the customer based on surveillance results from a surveillance unit that is adapted to monitor at least one of the employee and the customer; and the history information output unit is adapted to summarize the exception process-related information of the subject employee or customer and output history information when information indicating an exception process is contained in the acquired converted data and the fraud evaluation unit determines there is a possibility of fraud.

This aspect of the invention outputs the history information only when a possibility of fraud is detected from the employee or customer surveillance results, and the administrator can therefore determine if there was fraudulent or improper activity when the history information is output. As a result, because the administrator does not need to actively execute a search process, the effort required to check for fraudulent activity can be greatly reduced. In addition, because the possibility of fraud is detected automatically, whether or not there is fraudulent or improper activity can be accurately determined without relying on the subjectivity or effort of the administrator.

In an use according to another aspect of the invention, the history information output unit is adapted to send the history information to a predetermined administrator using e-mail or a web application.

This aspect of the invention can send the history information to the administrator regardless of where the administrator is.

In an use according to another aspect of the invention, the surveillance unit includes an imaging unit that is adapted to image at least one of the employee and the customer; and the history information output unit is adapted to output the imaging result of the imaging unit at the time fraud was detected by the fraud evaluation unit with the history information.

With this aspect of the invention the administrator can use the imaging results as material for verifying fraudulent activity because the imaging results from the imaging unit when the possibility of fraud is detected are output with the history information.

In an use according to another aspect of the invention, the external device also has a time-of-purchase information recording unit that is adapted to record time-of-purchase information based on the converted data acquired at the time of product purchase related to the imaging result of the imaging unit at the time of purchase in the database; and the history information output unit is adapted to output with the history information the imaging result of the imaging unit at the time the product subject to the exception process was purchased.

With this aspect of the invention the administrator can use the imaging results as material for verifying fraudulent activity because the imaging results from the imaging unit when the product subject to the exception process was purchased are output with the history information.

In an use according to another aspect of the invention, when the type of exception process is a product return process for returning a product, the fraud evaluation unit is adapted to reference the imaging result of the imaging unit or the exception process-related information during the product return process, and the imaging result of the imaging unit or the time-of-purchase information from when the product subject to the return process was purchased, and to determine there is a possibility of fraud when the customer of the return process and the customer at the time of purchase are not the same person.

This aspect of the invention can determine there is a possibility of a fraudulent return and output history information when the customer in the product return process and the customer at the time of purchase are not the same person.

In an use according to another aspect of the invention, the fraud evaluation unit is adapted to determine there is a possibility of fraud when the presence of a customer is evaluated from the surveillance results of the surveillance unit during the exception process and a customer is not present.

This aspect of the invention can determine there is a possibility of fraud and output history information because a customer is not present during the exception process.
Note that application of this configuration may be limited to only specific exception processes, such as when the type of exception process is a register error, a product return, making change, discount, or mark-down, for example.

In an use according to another aspect of the invention, when the type of exception process is a special discount process that discounts products for specific people, the fraud evaluation unit is adapted to determine if the customer is one of said specific people based on the surveillance result during the special discount process, and to determine there is a possibility of fraud when the customer is not one of said specific people.

This aspect of the invention can determine there is a possibility of fraud and output history information when a special discount process is executed and the subject customer is not one of the specific people to whom the discount applies, such as an employee that qualifies for an employee discount.

Another aspect of the invention is a program that causes a computer to execute the steps of the information processing device control method described above.

By using this program, a control method for an information processing device that detects the POS terminal operation can be implemented without modifying the POS terminal.
Other objects and attainments together with a fuller understanding of the invention will become apparent and appreciated by referring to the following description and claims taken in conjunction with the accompanying drawings.

### BRIEF DESCRIPTION OF THE DRAWINGS

- FIG. 1: is a block diagram showing the configuration of a store surveillance system according to the first embodiment of the invention.
- FIG.2: is a function block diagram of the store surveillance system according to the first embodiment of the invention.
- FIG. 3: is a control block diagram of a receipt printer according to the first embodiment of the invention.
- FIG. 4: shows an example of data conversion according to the first embodiment of the invention.
- FIG. 5: describes an exception process database according to the first embodiment of the invention.
- FIG. 6: describes a transaction process database according to the first embodiment of the invention.
- FIG. 7: is a flow chart of an information output process of the receipt printer according to the first embodiment of the invention.
- FIG. 8: is a function block diagram of a store surveillance system according to a second embodiment of the invention.
- FIG. 9: is a flow chart of the surveillance data recording process triggered by the information processing device acquiring transaction information in the second embodiment of the invention.
- FIG. 10: is a flow chart of the surveillance data recording process and receipt data changing process of the POS terminal triggered by the information processing device reading a receipt in the second embodiment of the invention.
- FIG. 11: is a flow chart of the surveillance data recording process triggered by the information processing device detecting a specific activity in the second embodiment of the invention.
- FIG. 12: shows an example of an exception process detection table according to the second embodiment of the invention.
- FIG. 13: is a function block diagram showing another example of an exception process detection pattern according to the second embodiment of the invention.
- FIG. 14: schematically describes another example of an exception process detection pattern according to the second embodiment of the invention.
- FIG. 15: shows an example of a specific activity detection table according to the second embodiment of the invention.
- FIG. 16: is a flow chart showing another example of a specific activity detection pattern according to the second embodiment of the invention.
- FIG. 17: is a function block diagram of a store surveillance system according to a third embodiment of the invention.
- FIG. 18: is a flow chart of a data recording process by an information processing device according to the third embodiment of the invention.
- FIG. 19: is a flow chart of a summary report compilation process executed by the information processing device according to the third embodiment of the invention.
- FIG. 20: shows an example of a summary report (for a product return process) according to the third embodiment of the invention.
- FIG. 21: shows an example of a summary report (for a register error process) according to the third embodiment of the invention.
- FIG. 22: shows an example of a summary report (for an employee discount process) according to the third embodiment of the invention.

### DESCRIPTION OF EMBODIMENTS »

An information processing device, a control method for an information processing device, and a program according to the present invention are described below with reference to the accompanying figures.
The information processing device according to the invention is described in the following embodiments applied to a store surveillance system. This store surveillance system is installed in a retail store such as a supermarket or a restaurant such as a family restaurant in order to detect fraudulent or improper activity by customers or employees.

### Embodiment 1

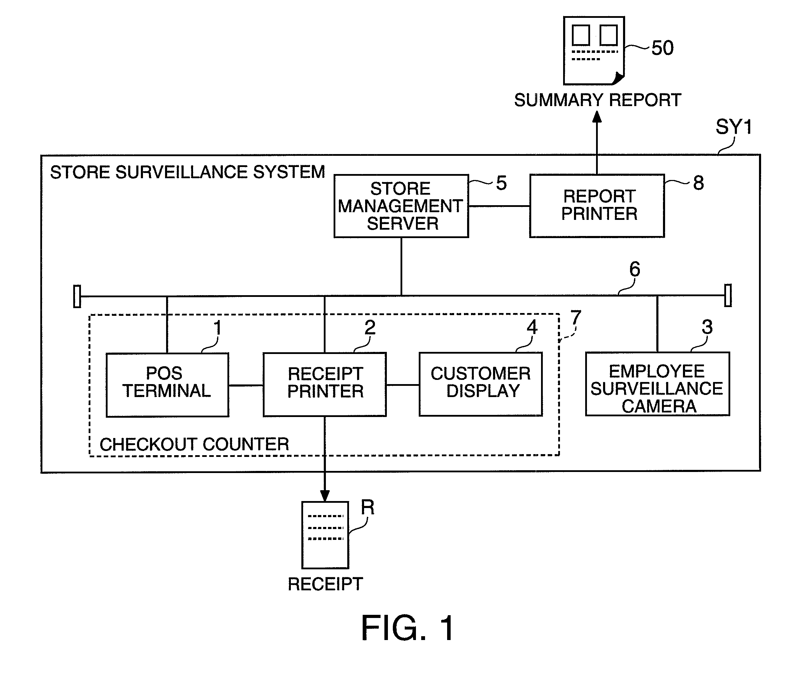

FIG. 1 shows the configuration of a store surveillance system SY1 according to the first embodiment of the invention. As shown in the figure, the store surveillance system SY1 includes a POS terminal 1 to executes a transaction process, a receipt printer 2 (information processing device) that prints receipts R, a customer display 4 that displays transaction information, an employee surveillance camera 3 for surveilling employees, a store management server 5 (external device) that centrally controls the store surveillance system SY1 , and a report printer 8 that prints summary reports 50. The POS terminal 1 and the receipt printer 2, the receipt printer 2 and the customer display 4, and the store management server 5 and report printer 8 are communicably connected through a serial interface (such as a USB (Universal Serial Bus) interface). The POS terminal 1 , receipt printer 2, employee surveillance camera 3 and store management server 5 are communicably connected through an in-house LAN 6 (a wire cable LAN or a wireless LAN).

Note that an example having only one POS terminal 1 is shown in FIG. 1 , but there may be a plurality of POS terminals 1 in the store surveillance system SY1. In this configuration a receipt printer 2, employee surveillance camera 3, and customer display 4 are connected to each POS terminal 1.

The POS terminal 1 is a cash register terminal installed at a checkout counter 7, and executes a transaction process based on product information input by an employee (operator). The transaction information (including print data for printing receipts R and display data for displaying on the customer display 4, collectively referred to below as the "output data") that is the result of the transaction process is output to the receipt printer 2.

The employee surveillance camera 3 is, for example, a CCD camera and is installed near the checkout counter 7 (such as on the ceiling or near the customer display 4). The image subjects are the employee operating the register at the checkout counter 7, the customer involved with the transaction process, and the products on the checkout counter 7. Note that a plurality of employee surveillance cameras 3 may be installed at one checkout counter 7. Images captured by the employee surveillance camera 3 are output to the receipt printer 2.

The receipt printer 2 issues (prints) receipts R based on output data (print data) output from the POS terminal 1. In addition to issuing receipts R, the receipt printer 2 also has a function for sending output data (display data) output from the POS terminal 1 to the customer display 4, a function for acquiring the imaging results from the employee surveillance camera 3, a function for determining the operation of the POS terminal 1 based on output data (print data and display data), a function for converting the result of this decision to data in a specified format, and a function for sending the converted data and imaging result of the employee surveillance camera 3 to the store management server 5. By thus using the receipt printer 2 as a primary means for data input and output (by filtering information acquired by the receipt printer 2 and outputting the necessary information), there is no effect on traffic on the POS backbone network (the network to which the POS terminal 1 is central). In addition, when the invention is applied in an existing POS system, there is no need to change the POS backbone network itself.

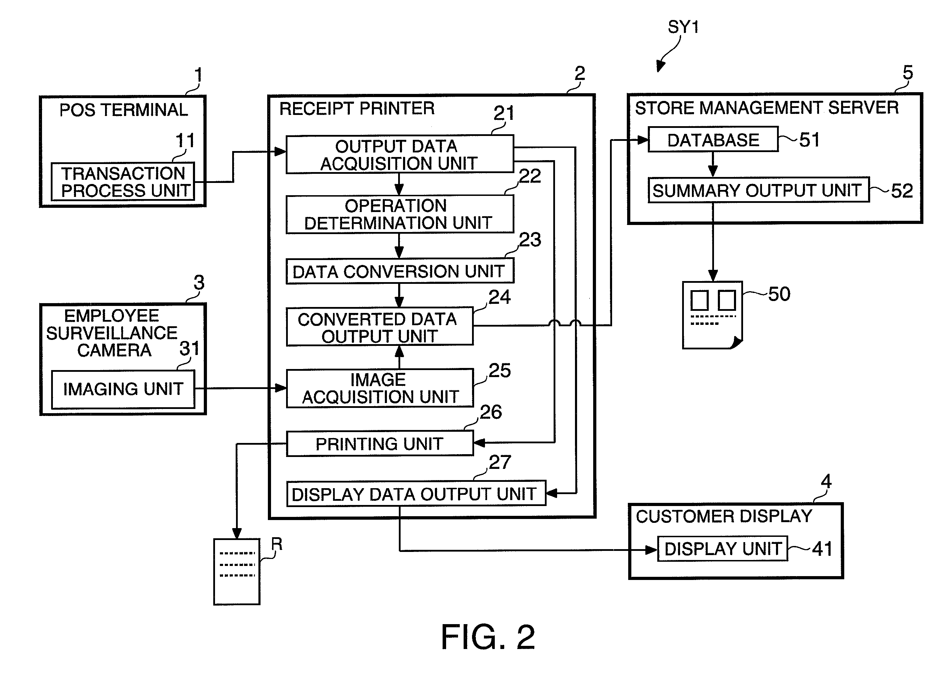

The store management server 5 acquires converted data from the receipt printer 2 and captured images from the employee surveillance camera 3, and stores the data in a database 51 (see FIG. 2). As necessary, the store management server 5 also summarizes information stored in the database 51 and outputs summary data to the report printer 8. A common office printer, for example, can be used as the report printer 8, and further description thereof is omitted.

The functional configuration of the store surveillance system SY1 is described next with reference to FIG. 2. The main functional component of the POS terminal 1 is a transaction process unit 11. The transaction process unit 11 executes a transaction process including a payment process and exception processes. The transaction process unit 11 also outputs the output data generated by the transaction process to the receipt printer 2.

In this embodiment of the invention an exception process is any process having a strong possibility of being used for fraudulent activity. More specifically, the exception processes include interrupt processes that cancel data input during a transaction process on the POS terminal 1 , cancellation processes (register error processes) that cancel a transaction process after the transaction is completed, product return processes for returning goods, mark-down processes for reducing the price of a product, discount processes for discounting a product, change processes for making change, verification processes for comparing the cash in the cash drawer with the total sales, payment and repayment processes for recording disbursements and cash repayments, and reissue processes for re-issuing a receipt.

These processes are identified as types of exception processes in the embodiments of the invention described below. In addition, for convenience, processes other than these exception processes that can be executed by the POS terminal 1 , that is, processes that generate transaction data, are referred to as "normal processes." Included in these normal processes is a payment process that is executed at the time of a product purchase.

The main functional component of the employee surveillance camera 3 is an imaging unit 31 (imaging device). The imaging unit 31 takes images of the checkout counter 7 and surroundings, and the image data captured by the imaging unit 31 is output as the imaging result to the receipt printer 2 together with a camera ID identifying the employee surveillance camera 3 and information about the date and time the image was captured. Note that this imaging date and time denote the output of a real-time clock (RTC) disposed to the employee surveillance camera 3.

The main functional component of the customer display 4 is the display unit 41. The display unit 41 displays transaction information for the customer based on the display data output from the receipt printer 2.

The main functional components of the receipt printer 2 are a output data acquisition unit 21, an operation determination unit 22, a data conversion unit 23, a converted data output unit 24, an imaging result acquisition unit 25, a print unit 26, and a display data output unit 27. The output data acquisition unit 21 acquires output data output from the POS terminal 1 (transaction process unit 11).

The operation determination unit 22 interprets the meaning of the output data acquired by the output data acquisition unit 21, and determines the operation of the POS terminal 1. More specifically, the operation determination unit 22 determines if the POS terminal 1 was operated to execute an exception process during the transaction process. It also determines the type of exception process and the transaction amount.

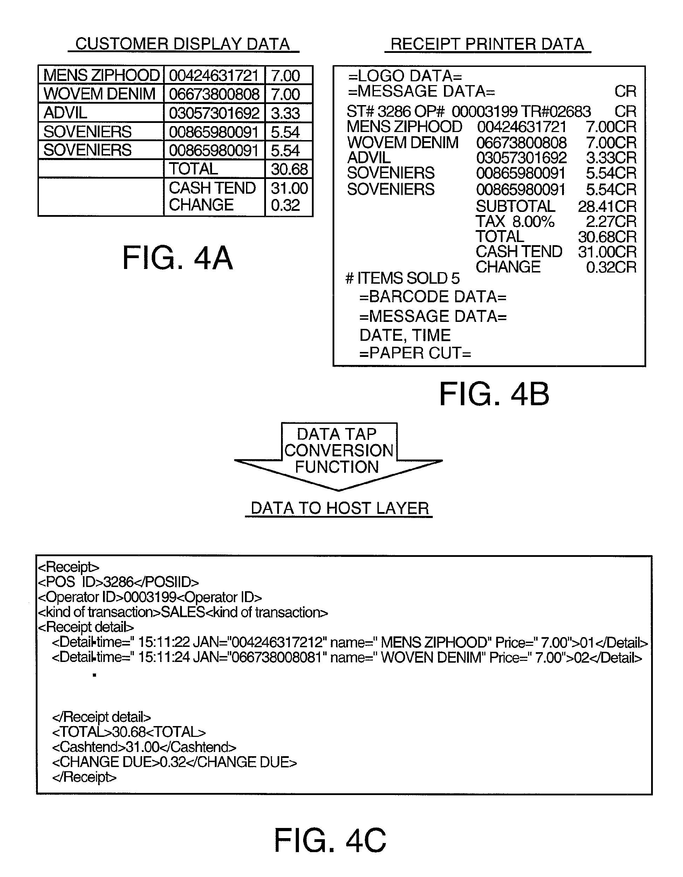

The data conversion unit 23 converts the result from the operation determination unit 22 to data in a specific format that can be interpreted by the store management server 5. In this embodiment of the invention the data is converted to XML (extensible Markup Language) data as the specific data format (see FIG. 4C).

The converted data output unit 24 outputs the converted data (XML data) output from the data conversion unit 23 to the store management server 5. Note that below the converted data when the operation determination unit 22 identifies an operation for executing an exception process is called "exception process information" below. The converted data when the operation determination unit 22 determines an operation for executing an exception process was not performed (that is, information relating to normal processes) is called "normal process information."

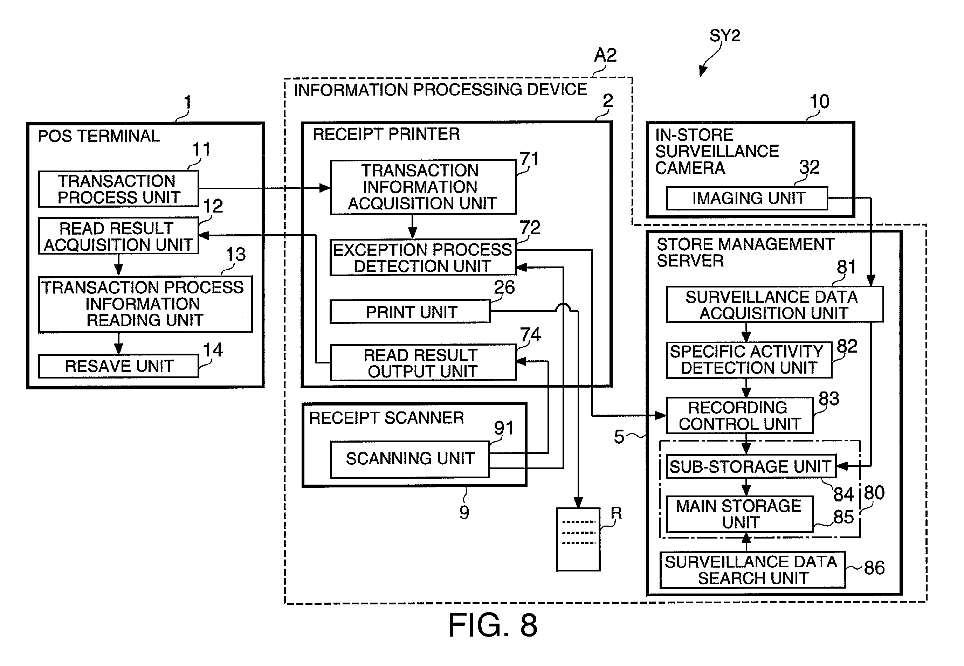

When the converted data output unit 24 outputs exception process information, the imaging result acquired by the imaging result acquisition unit 25 described below is also output with the exception process information. The imaging result output at this time is the imaging result from the employee surveillance camera 3 within a specified time before and after the decision time of the operation determination unit 22. More specifically, the imaging result is output for a specified time before and after when the POS terminal 1 is determined to have executed an exception process (that is, approximately when the exception process was invoked).
Note that the recording method of the recording control unit 83 (see FIG. 8) described below in the second embodiment can be applied here as the imaging result recording method. In this scenario the recording control unit 83 and storage unit 80 (see FIG. 8) are included in the receipt printer 2.

The imaging result acquisition unit 25 acquires the imaging result from the employee surveillance camera 3 (imaging unit 31). When the output data is print data, the print unit 26 prints the output data on receipt paper and issues a receipt R.
When the output data is display data, the display data output unit 27 outputs the display data on the customer display 4 (display unit 41 ).

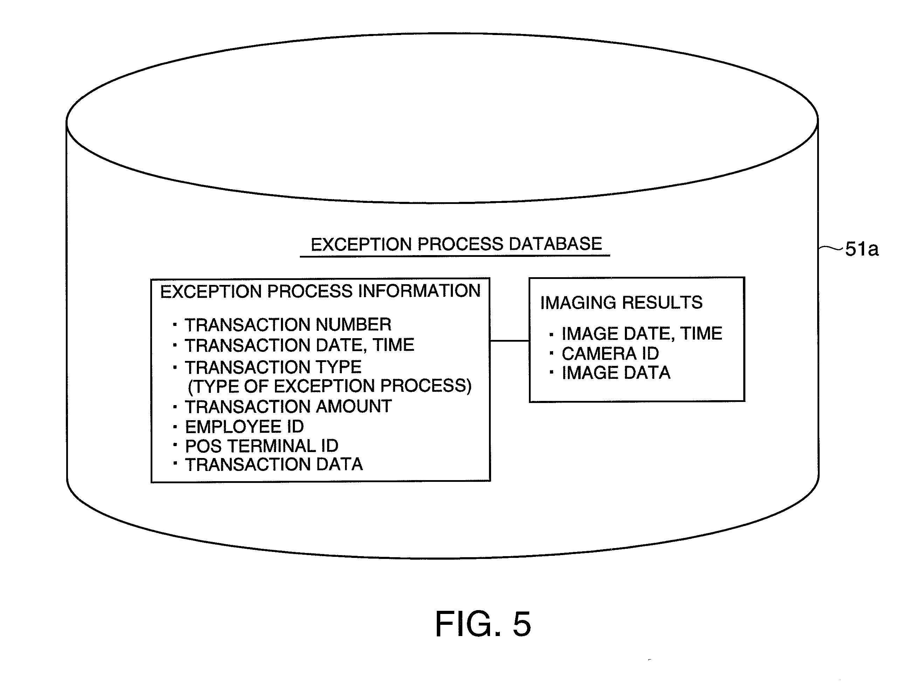

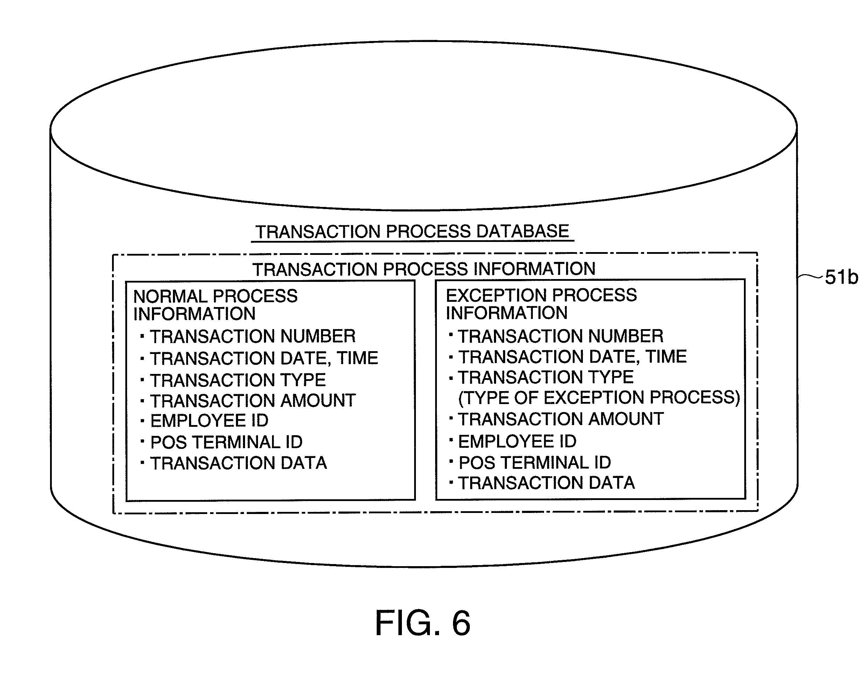

The main functional components of the store management server 5 are the database 51 and a summary output unit 52. The database 51 stores the converted data output from the converted data output unit 24 and the imaging result. While described in detail below, the database 51 includes an exception process database 51 a (see FIG. 5) that stores exception process information, and a transaction process database 51 b (see FIG. 6) that stores information for all transaction processes (normal process information and exception process information).

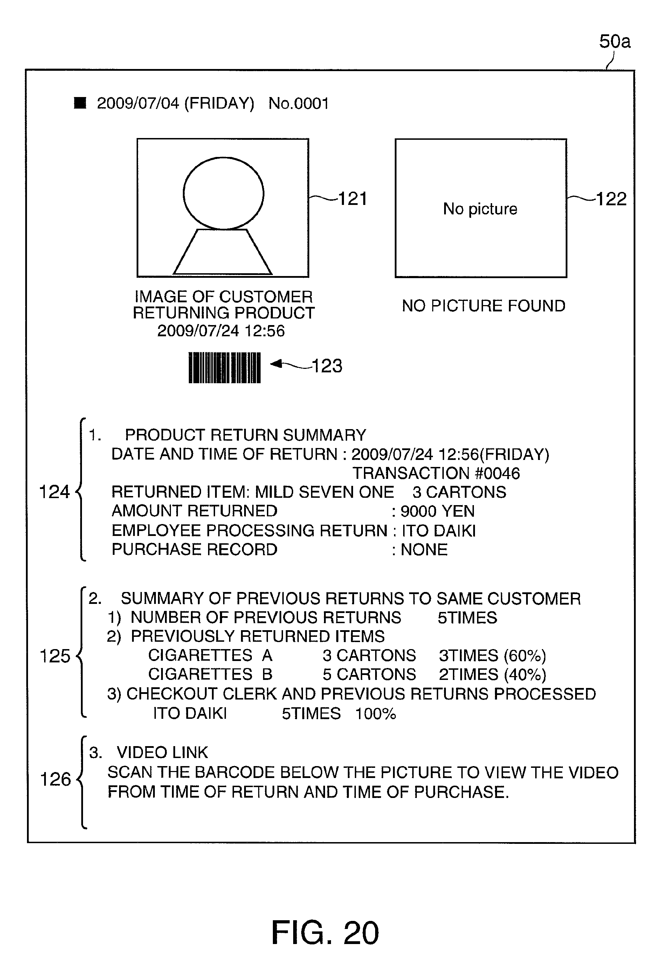

Based on the exception process information stored in the exception process database 51 a, the summary output unit 52 tabulates the occurrence of exception processes for individual employees (by employee ID) and customers (by customer ID), and outputs the tabulated results as a summary report 50. This embodiment of the invention anticipates outputting the summary report 50 from a report printer 8, but the summary report 50 may be displayed on a display (not shown in the figure), or sent electronically to an administrator (such as the store manager) using e-mail or a web application. Specific examples of the tabulation method and summary report 50 are described in the third embodiment below (FIG. 20 to FIG. 22).

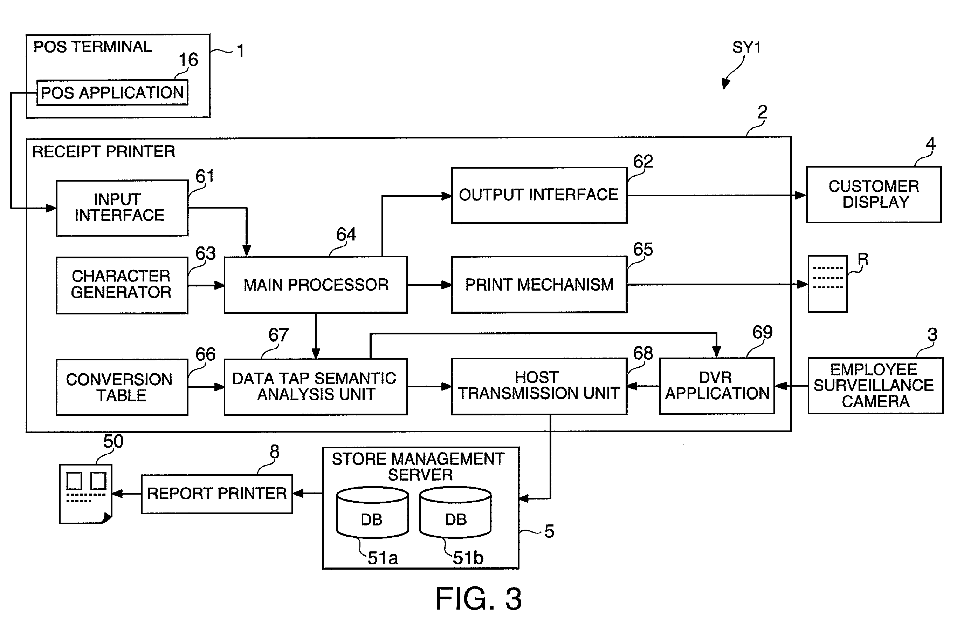

The control configuration of the store surveillance system SY1 is described next with reference to FIG. 3.
The POS terminal 1 has a POS application 16. The POS application 16 is a main part of the transaction process unit 11.

The receipt printer 2 includes an input interface 61, an output interface 62, a character generator 63, a main processor 64, a print mechanism 65, a conversion table 66, a data tap semantic analysis unit 67, a host transmission unit 68, and a DVR application 69. Of these, the conversion table 66, data tap semantic analysis unit 67, host transmission unit 68, and DVR application 69 are specific to a receipt printer 2 according to this embodiment of the invention.

Note that while not shown in the figures, the main processor 64 and data tap semantic analysis unit 67 are rendered by a CPU (Central Processing Unit), ROM (Read Only Memory) and RAM (Random Access Memory). The host transmission unit 68 can be rendered by a wireless or wired cable LAN connector.

When output data (print data and display data) from the POS terminal 1 is received through the input interface 61, the main processor 64 accesses the character generator 63 and converts the received data to text data (text conversion). Note that when the output data from the POS terminal 1 is text data, a process that extracts the text data may be used instead of a text conversion process. The text-converted display data is output through the output interface 62 to the customer display 4. The text-converted print data is output to the print mechanism 65. If the receipt printer 2 is specified as an invalid peripheral, the text-converted data is output only to the customer display 4. If the receipt printer 2 is specified a valid peripheral device, the text-converted data is output to the customer display 4 and the print mechanism 65.

When text-converted display data or print data is tapped, the data tap semantic analysis unit 67 references the conversion table 66 to analyze the operation and determine the POS terminal 1 operation performed. The conversion table 66 can rewrite the conversion rules according to the file format of the POS application 16. As a result, the data tap semantic analysis unit 67 can analyze operations and accurately determine the POS terminal 1 operation even when incorporated into POS systems that use different file formats. More specifically, by having the conversion table 66 and data tap semantic analysis unit 67, the receipt printer 2 according to this embodiment of the invention can interpret the operation of POS terminals 1 built to different specifications. The data tap semantic analysis unit 67 can therefore be used in different types of POS systems and its utility can be improved.

The data tap semantic analysis unit 67 then converts the result of the analysis to XML data that can be interpreted by the store management server 5, and outputs to the host transmission unit 68. More specifically, the exception process information and normal process information are written in XML.

FIG. 4 describes a specific example of data conversion by the data tap semantic analysis unit 67. The data tap semantic analysis unit 67 converts text-converted data for the customer display 4 (see FIG. 4A) and text-converted data for the print mechanism 65 (see FIG. 4B) to XML data (see FIG. 4C) for the host layer by means of the data tap conversion function. FIG. 4 shows a conversion example of the output data from a transaction process (data for displaying and printing the product names, prices and subtotal). Converting the data to the host layer to a markup language format has the advantage of easily converting data to a format that can be displayed on a web browser, for example.

Referring again to FIG. 3, the DVR application 69 stores the imaging result from the employee surveillance camera 3 in a specific storage area (equivalent to the sub-storage unit 84 in the second embodiment below), and triggered by detection of an exception process by the data tap semantic analysis unit 67, outputs the imaging results for a specified period of time to the host transmission unit 68. When an exception process is invoked, the host transmission unit 68 adds the imaging result output from the DVR application 69 to the XML data (exception process information) output from the data tap semantic analysis unit 67, and outputs to the store management server 5. During normal processing, the host transmission unit 68 sends only the XML data (normal process information) output from the data tap semantic analysis unit 67.

The store management server 5 stores an exception process database 51 a that stores exception process information and the imaging results from the employee surveillance camera 3, and a transaction process database 51 b that stores the exception process information and normal process information. The exception process database 51 a is a database that is maintained for printing summary reports 50. The data recorded in the exception process database 51 a is tabulated by employee or customers, for example, and printed by the report printer 8. Note that by specifying other search keys, summary reports 50 can also be compiled and output by date, type of exception process, or products handled in the exception processes.

The transaction process database 51 b is maintained to record all transaction processes (transaction data). Although not shown in the figures, transaction data can be printed or displayed and output as a transaction history.

Content recorded in the exception process database 51 a and transaction process database 51 b is described next with reference to FIG. 5 and FIG. 6.
FIG. 5 shows the exception process database 51 a. As shown in the figure, the exception process database 51 a stores exception process information related to imaging results from the employee surveillance camera 3. The exception process information contains the decision result from the operation determination unit 22, including the transaction number, transaction date and time, transaction type (type of exception process) transaction amount, employee ID, POS terminal ID, and the transaction data. The imaging results include the imaging date and time, camera ID, and image data.

FIG. 6 describes the transaction process database 51b. As shown in the figure, the transaction process database 51b stores normal process information and exception process information. The same items stored as the exception process information are stored as the normal process information. Note that the normal process information and exception process information are shown stored separately in the figures, but the records could be arranged by transaction number and stored as undifferentiated transaction process information. A configuration in which the exception process database 51 a is incorporated in the transaction process database 51 b is also conceivable.

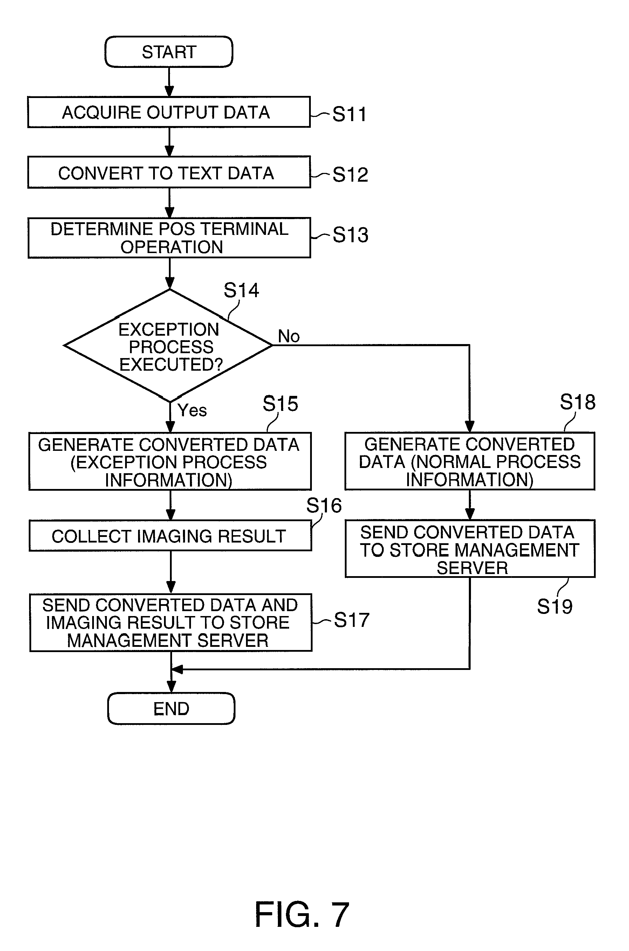

The information output process of the receipt printer 2 is described next with reference to the flow chart in FIG. 7. When the receipt printer 2 acquires output from the POS terminal 1 (S11, operation determination unit 22), the main processor 64 converts the received data to text data (S12). The data tap semantic analysis unit 67 identifies the operation of the POS terminal 1 from the text-converted data (S13, operation determination unit 22), and determines if the operation included execution of an exception process (S14, operation determination unit 22).

If an exception process was invoked (S14 returns Yes), the result is converted to XML data and converted exception process information is generated (S15, data conversion unit 23). The DVR application 69 also collects the imaging results from the employee surveillance camera 3 (S16, imaging result acquisition unit 25). The host transmission unit 68 then sends the converted data (exception process information) and imaging result to the store management server 5 (S17, converted data output unit 24). However, if an exception process was not invoked (S14 returns No), the operation detection result is converted to XML data, generating converted data (normal process information) (S18, data conversion unit 23), and the host transmission unit 68 sends the converted data to the store management server 5 (S19, converted data output unit 24).

Note that in S16 the DVR application 69 may collect the imaging results according to the operation detection result from the data tap semantic analysis unit 67. More specifically, the imaging time for which the imaging results are to be collected (a specific time before and after the decision time of the operation determination unit 22) is determined according to the transaction data content (for example, the type of exception process and the transaction amount), and the imaging results from that imaging period are collected. This configuration enables sending the imaging results appropriate to the type of exception process and the transaction amount (for example, if the transaction amount is large, the imaging results from a longer imaging period because their importance is greater) to the store management server 5.

As described above, because the receipt printer 2 according to the first embodiment of the invention determines the operation of the POS terminal 1 based on output data output from the POS terminal 1 , and outputs the result of this decision to the store management server 5, POS terminal 1 operations can be detected without modifying the POS terminal 1. As a result, because there is no need to change the POS application 16, for example, the development cost associated with adding an operation detection function can be greatly reduced, and the cost burden to the retailer can be reduced. In addition, while the file format generally differs according to the POS application 16, the receipt printer 2 according to this embodiment of the invention has a data tap conversion function, can therefore be adapted to a wide variety of different POS systems by rewriting the conversion table 66, and general utility is thus improved.

Furthermore, when an operation of the POS terminal 1 is determined to be an operation that invokes an exception process, exception process information indicating an exception process is stored in the exception process database 51 a and can be output by employee or customer as a summary report 50, and the summary report 50 can be used to educate the employee on POS terminal 1 operation, to determine how customers are handled, and to detect fraudulent activity, for example. Furthermore, because exception process information is stored with imaging results from the employee surveillance camera 3 in the exception process database 51 a, the administrator can more specifically understand the situation in which an exception process was invoked by printing the imaging results in the summary report 50. Furthermore, because the imaging time of the recorded images can be determined according to the type of exception process or transaction amount, imaging results from an imaging time that is appropriate to the particular transaction can be assured, and can be used as meaningful evidence when proving fraudulent activity.

The information processing device according to this embodiment of the invention is described as having an internal receipt printer 2, but except for the print unit 26, all or part of the receipt printer 2 can be rendered by an external device other than the receipt printer 2 or by the store management server 5.
For example, the imaging results from the employee surveillance camera 3 are sent through the receipt printer 2 to the store management server 5, but a configuration that acquires the imaging results directly by means of the store management server 5 is also conceivable. In this configuration the DVR application 69 is installed on the store management server 5. The parts of the store management server 5 can also be rendered by the POS system or a WWW server.

This embodiment sends the converted data to the store management server 5 in all transaction processes, but the converted data could be sent only when an exception process is invoked. This embodiment also describes sending the imaging results from an imaging time determined by the type of exception process and transaction amount together with the converted data when an exception process is called, but imaging results from the same imaging time may be sent regardless of the type of exception process or transaction amount. Imaging results may also be sent with the converted data during normal processes and not only when an exception process is called.

Yet further, the converted data is written in an XML format in the foregoing embodiment, but CSV (comma separated values) format may be used.

### Embodiment 2

A second embodiment of the invention is described next with reference to FIG. 8 to FIG. 16. This embodiment of the invention is directed to efficiently recording surveillance data (equivalent to the imaging results in the first embodiment) as useful proof of fraudulent activity by accurately detecting when an exception process is called. The method of detecting when an exception process is invoked is described below.
Note that like parts in this and the first embodiment are identified by like reference numerals, and further description thereof is omitted. In addition, modifications that are applicable to the same components in the first embodiment can also be applied to this embodiment.

FIG. 8 is a function block diagram of a store surveillance system SY2 according to the second embodiment of the invention. The store surveillance system SY2 according to this embodiment of the invention includes a POS terminal 1 , a receipt printer 2, a receipt scanner 9 for reading receipts R, a in-store surveillance camera 10 for monitoring the inside of a store, and a store management server 5 that administers the store surveillance system SY2.
While the system configuration is not specifically shown, the POS terminal 1 and receipt printer 2, and the receipt printer 2 and receipt scanner 9, are communicably connected through a serial interface. This embodiment is also configured so that the imaging results from the in-store surveillance camera 10 are sent directly through the in-house LAN 6 (see FIG. 1 ) to the store management server 5. As indicated by the dotted line in the figure, the receipt printer 2, receipt scanner 9, and store management server 5 together render an information processing device A2.

The main functional part of the receipt scanner 9 is the scanning unit 91. The scanning unit 91 scans the receipt R presented by the customer when a product return process is called or a cash register error process is invoked. While described in detail below, this embodiment of the invention enables detecting exception processes by scanning a receipt R.

The main functional components of the POS terminal 1 are the transaction process unit 11, read result acquisition unit 12, transaction process information reading unit 13, and resave unit 14.
The transaction process unit 11 executes a transaction process and outputs the transaction information (equivalent to the output data in the first embodiment) resulting from the transaction process to the receipt printer 2.

The read result acquisition unit 12 acquires the result of the receipt scanner 9 (scanning unit 91) reading a receipt R, that is, information such as the transaction number, product codes, product names, quantities, prices, transaction date and time, employee ID, and POS terminal ID.
The transaction process information reading unit 13 reads the corresponding transaction process information (transaction data) from the transaction process database 51b (see FIG.6) based on the result of reading the receipt R acquired by the read result acquisition unit 12.
The resave unit 14 changes only part of the transaction process information read by the transaction process information reading unit 13 and resaves the information in the transaction process database 51b, and conceptually includes a keyboard or other operating means. When a transaction process is completed and the transaction process is then cancelled, this eliminates the need for the employee to re-input the products on the receipt R and thus makes the transaction process more efficient.

The main functional components of the receipt printer 2 include the transaction information acquisition unit 71, exception process detection unit 72, print unit 26, and read result output unit 74.
The transaction information acquisition unit 71 acquires transaction information output from the POS terminal 1 (transaction process unit 11).

The exception process detection unit 72 detects when an exception process was called as a result of the transaction information acquisition unit 71 acquiring transaction information containing information indicating an exception process. Note that while a customer display 4 (see FIG. 2) is not shown in FIG. 8, the start of an exception process can be detected from the display data to be displayed on the customer display 4. In addition, as described above, the exception process detection unit 72 also detects when an exception process has been called as a result of reading the receipt R by means of the receipt scanner 9 (scanning unit 91 ).

The print unit 26 prints the transaction information acquired by the transaction information acquisition unit 71 on receipt paper, and issues a receipt R. When the receipt scanner 9 has read the receipt R, the read result output unit 74 outputs the result to the POS terminal 1.

The main functional part of the in-store surveillance camera 10 is the imaging unit 32. In-store surveillance cameras 10 are installed at plural locations throughout the store, including near the checkout counter 7 and at the store entrance. The image data captured by the in-store surveillance cameras 10 is output to the store management server 5 as surveillance data (equivalent to the imaging results in the first embodiment) together with such information as a camera ID identifying the in-store surveillance camera 10 that captured the particular images and the image date and time.

The main functional parts of the store management server 5 are a surveillance data acquisition unit 81, specific activity detection unit 82, recording control unit 83, storage unit 80, and surveillance data search unit 86. The storage unit 80 includes a sub-storage unit 84 (buffer) that records while continually updating the surveillance data for the specified time while the imaging unit 32 is imaging, and a main storage unit 85 that stores, in a nonvolatile manner, a part of the surveillance data stored in the sub-storage unit 84.

The surveillance data acquisition unit 81 acquires surveillance data in real time from a plurality of in-store surveillance cameras 10 (imaging units 32). The specific activity detection unit 82 determines a specific activity of at least an employee or a customer from the surveillance results acquired by the surveillance data acquisition unit 81. More specifically, specific activities that are often observed in conjunction with a fraudulent or improper exception process, such as an employee looking around frequently and acting suspiciously, or a customer moving from the store entrance directly to a checkout counter 7, are evaluated.

The recording control unit 83 controls recording surveillance data to the main storage unit 85. More specifically, when the specific activity detection unit 82 identifies a specific activity, the surveillance data for a specified time (time L) referenced to when the specific activity was identified is recorded in the main storage unit 85. When an exception process is detected by the exception process detection unit 72, the recording control unit 83 also records surveillance data for a specified time (time N) referenced to when an exception process is called in the main storage unit 85. As a result, the recording control unit 83 can retrieve and record the surveillance data for a specified time including surveillance data from before the exception process was called from the surveillance data stored in the sub-storage unit 84 to the main storage unit 85.

Note that the values L and N of the specified time L referenced to when the specific activity was identified, and the specified time N referenced to when an exception process was called, can be desirably set by the user.
Alternatively, the surveillance data for the specified time (time L) referenced to when the specific activity was identified may be set as the surveillance data with a start time of time P before the specific activity was detected (where 0 ≤ P ≤ L), and this value P can also be desirably set by the user. Likewise, the surveillance data for the specified time (time N) referenced to when an exception process is called may be set as the surveillance data with a start time of time M before the exception process was called (where 0 ≤ M ≤N), and this value M can also be desirably set by the user.

The recording control unit 83 adds tag information denoting that an exception process was called or the conditions when the specific activity was detected to the surveillance data for the specified time stored in the main storage unit 85. This tag information denotes, for example, the type of exception process (type of transaction), the location of the employee in the store, whether or not there is a customer near the checkout counter 7, audio data from inside the store, including near the checkout counter 7, the date and time of the exception process (date and time of the transaction), and the date and time of the detected specific activity. Selected data captured when the scanning unit 91 reads a receipt R, and selected items in the exception process information described in the first embodiment (see FIG. 5), can also be used as tag information.

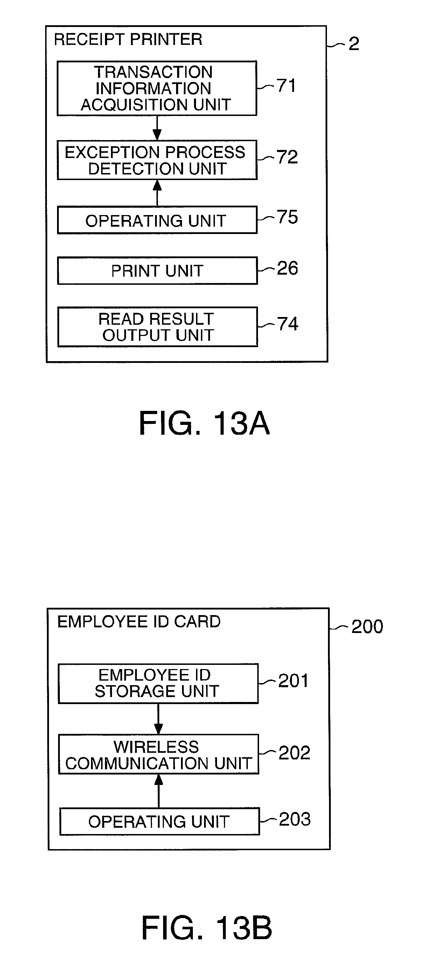

The location of an employee in the store can be determined by facial recognition using image data from the in-store surveillance cameras 10 and comparing this image data with employee faces stored in a facial recognition database (not shown in the figure).
Alternatively, a plurality of RFID (radio frequency identification) readers could be installed throughout the store, each employee could be made to wear an employee ID card 200 (see FIG. 13B) having an embedded RFID chip, and the location of each employee in the store could be identified by reading the RFID chips in the employee ID cards. This configuration requires each employee ID card 200 have a storage unit 201 (IC chip) in which the employee ID is recorded, and a wireless communication unit 202 (antenna) for wirelessly communicating with the RFID reader. The RFID reader communicates through a wireless LAN router not shown with the store management server 5 or a receipt printer 2 connected to the in-house LAN 6. Further alternatively, employees could be assigned an electronic device with a built-in GPS (Global Positioning System) antenna to determine the location of each employee in the store.

Note, further, that the presence of a customer around a checkout counter can be determined by analyzing image data from the in-store surveillance cameras 10.
In-store audio data including around the checkout counter can be acquired by placing a plurality of microphones in the store, such as around the checkout counter 7, and semantically analyzing the audio.

The surveillance data search unit 86 searches the surveillance data using tag information added to the surveillance data, and conceptually includes an operating means such as a keyboard or mouse. Note that by specifying an employee ID or type of exception process as the search key of the surveillance data search unit 86, a summary report 50 such as described below in the third embodiment of the invention (see FIG. 20 to FIG. 22) can also be printed.

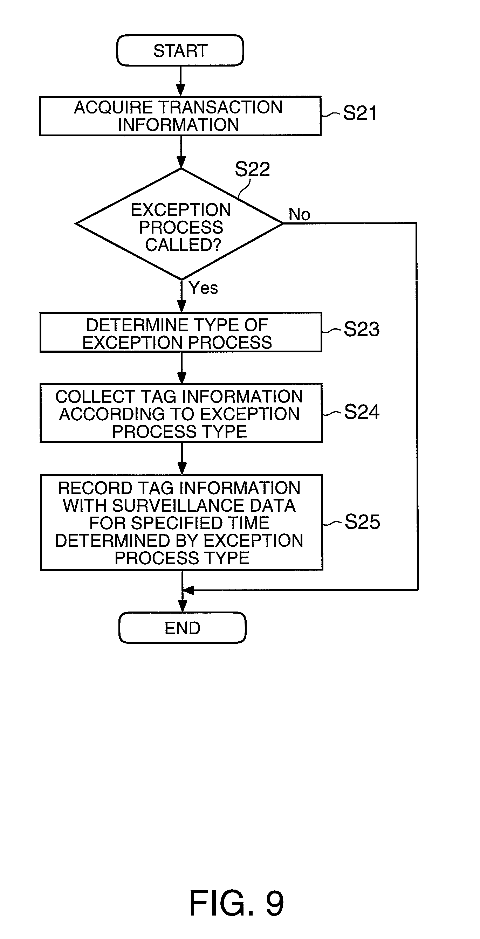

The control method of the recording control unit 83 is described next with reference to FIG. 9 to FIG. 11. As described above, the recording control unit 83 acquires transaction information, and triggered by reading a receipt R and detecting a specific activity, records the surveillance data to the main storage unit 85. Specific examples of this surveillance data recording process are described below.

FIG.9 is a flow chart showing the surveillance data recoding process triggered by acquiring transaction information in the information processing device A2.
When the receipt printer 2 acquires transaction information from the POS terminal 1 (S21, transaction information acquisition unit 71 ), whether or not an exception process was called is determined according to whether or not information denoting an exception process is included in the transaction information (S22, exception process detection unit 72). If an exception process was detected (S22 returns Yes), the type of exception process is also determined (S23, exception process detection unit 72).

The store management server 5 collects tag information from when the exception process was called according to the type of exception process detected by the receipt printer 2 (S24, recording control unit 83). For example, if a cancellation process or product return process is called, the locations of employees in the store and whether or not there is a customer near the checkout counter 7 are collected as the tag information, and if the exception process was a markdown process or discount process, audio data including audio from around the checkout counter 7 is collected as the tag information. Note that whether or not there is a customer near the checkout counter 7 can be determined by detecting faces in the images captured by the in-store surveillance cameras 10 or using infrared body detectors, and the results of the detection method used can be collected as the tag information. In addition, in-store audio data can be collected as the tag information using the results of voice recognition from the audio picked up by microphones installed near the checkout counter 7 and other locations in the store.

The store management server 5 also records the surveillance data for a time specified according to the type of exception process detected by the receipt printer 2 with the tag information (S25, recording control unit 83). For example, if a cancellation process or product return process is called, surveillance data for the 20 seconds before and after the exception process was detected (a total 40 seconds of surveillance data) is recorded, but if a markdown process or discount process was called, surveillance data for the 30 seconds after the exception process was detected is recorded. The recording control unit 83 thus reads and records the necessary surveillance data from the surveillance data stored in the sub-storage unit 84 in main storage unit 85.

If in S22 the receipt printer 2 does not detect an exception process (S22 returns No), a command is not sent from the receipt printer 2 to the store management server 5, and the process ends without the store management server 5 recording surveillance data.

In the foregoing example tag information is collected according to the type of exception process and the imaging time of the surveillance data is determined according to the type of exception process, but the same tag information may be collected or the imaging time of the surveillance data may be the same regardless of the type of exception process.

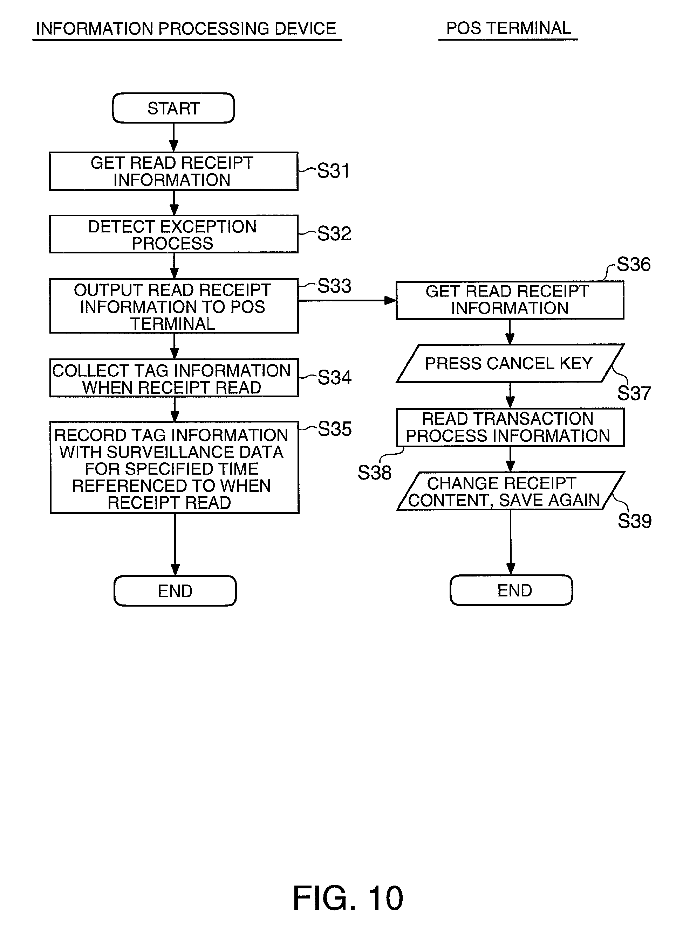

FIG. 10 is a flow chart of the surveillance data recording process triggered by reading a receipt R, and the receipt content changing process of the POS terminal 1 , in the information processing device A2 according to this embodiment of the invention. This example describes processes that are executed when an exception process that requires a customer present a receipt R is executed, such as a cancellation process or product return process. Note that steps shown with a parallelogram border (that is, steps S37 and S39) in the figure are steps that require employee intervention.

When the receipt printer 2 acquires the result of reading a receipt R by the receipt scanner 9 (S31), it detects that an exception process was called (S32, exception process detection unit 72), and outputs the result of reading the receipt R to the POS terminal 1 (S33, read result output unit 74).

The store management server 5 then collects tag information for when the receipt R was read (approximately equal to when the exception process was detected) (S34, recording control unit 83). In this instance information such as the date and time the exception process executed is collected as the tag information. The store management server 5 also records the surveillance data for a specified time referenced to when the receipt R was read with the tag information (S35, recording control unit 83). In this example surveillance data is recorded for a 60 second recording time starting from 20 seconds before the receipt R was read.

When the result of reading the receipt R is acquired from the receipt printer 2 (S36, read result acquisition unit 12) and the employee presses a cancel key (presses a specific key on the keyboard of the POS terminal 1) (S37), the POS terminal 1 reads the corresponding transaction process information (transaction data ) from the transaction process database 51 b (see FIG. 6) (S38, transaction process information reading unit 13). An operation that changes the content of the receipt is then performed by the employee and the transaction process information is resaved (S39, resave unit 14). Note that resaving the receipt information results in a new receipt R being issued, but description of this step is omitted here.

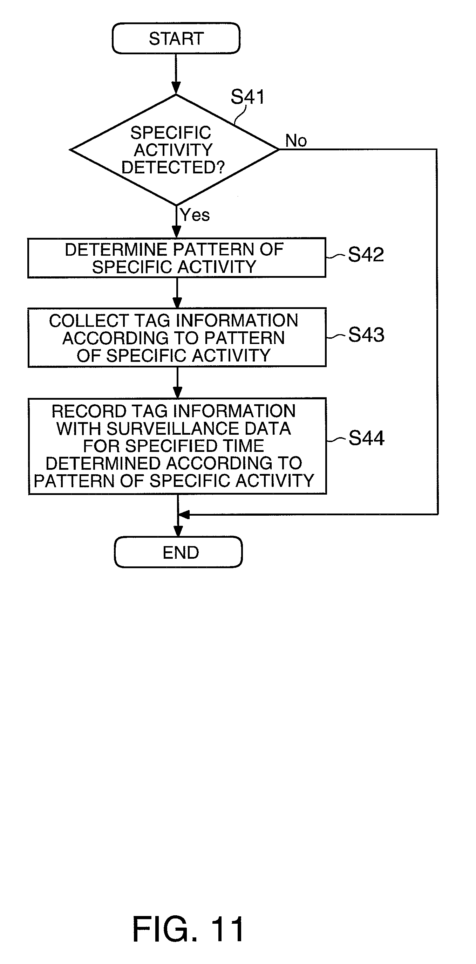

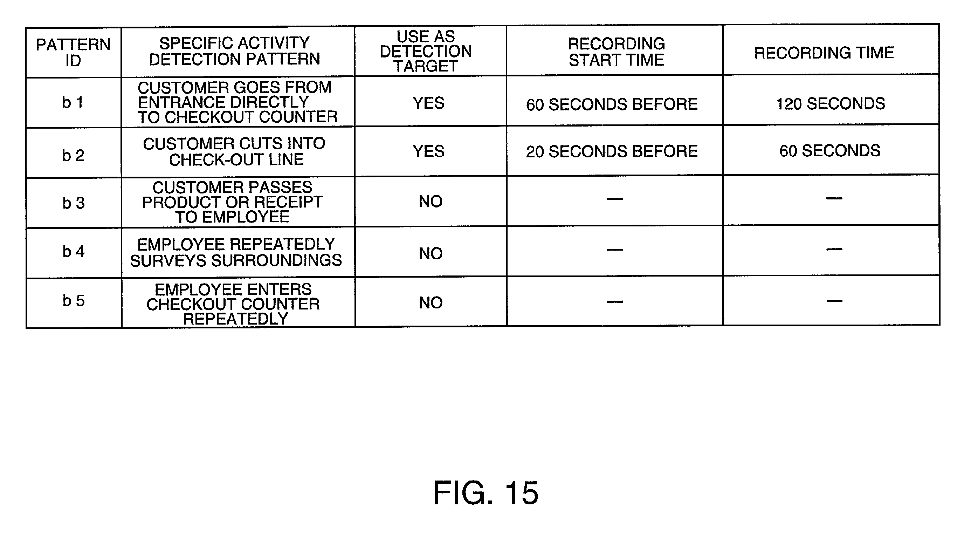

FIG. 11 is a flow chart showing the surveillance data recording process executed by the information processing device A2 when a specific activity of an employee or customer is detected. In this example all steps are executed by the store management server 5.
When the store management server 5 detects a specific activity of an employee and/or a customer from the acquired surveillance data (S41 returns Yes), it identifies the detection pattern of the specific activity (S42, specific activity detection unit 82). The detection patterns of specific activities are described below with reference to FIG. 15. The store management server 5 then collects tag information according to the detection pattern of the specific activity (S43, recording control unit 83 ), and records the surveillance data for the specified time corresponding to the specific activity detection pattern with the tag information described above (S44, recording control unit 83).

If a specific activity of an employee and/or customer is not detected in S41 (S41 returns No), the store management server 5 ends the process without recording surveillance data.

Note that in this example tag information is collected according to the specific activity detection pattern and the imaging time of the surveillance data is determined according to the specific activity detection pattern, but the same tag information may be collected and the surveillance data imaging time may be the same regardless of the detection pattern.

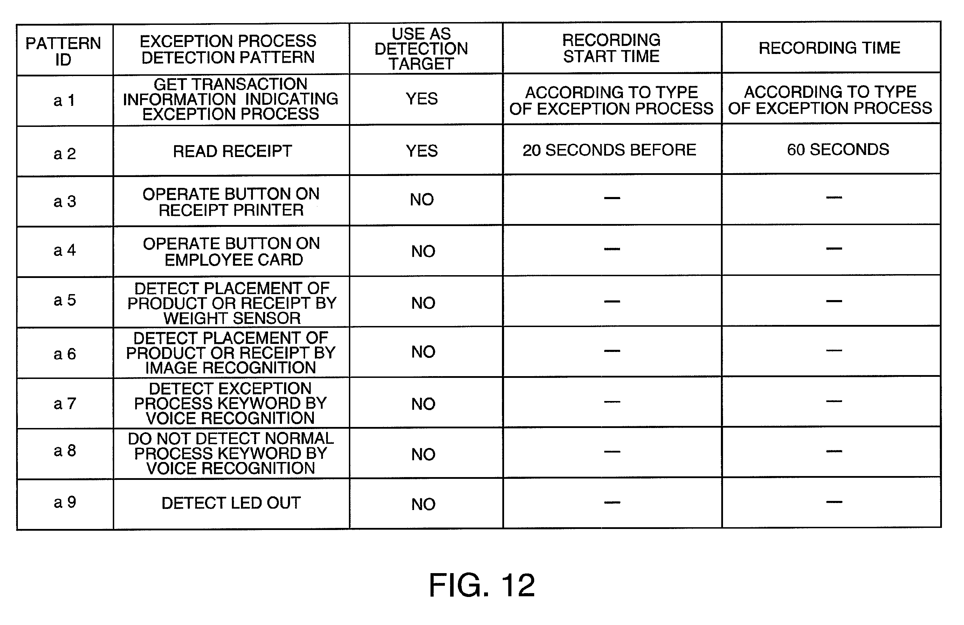

Setting the detection patterns that trigger the surveillance data recording process is described next with reference to FIG. 12 to FIG. 16.
FIG. 12 shows an example of an exception process detection table. Note that this table is stored so that it can be referenced by both the receipt printer 2 and the store management server 5, but may be stored on the receipt printer 2, the store management server 5, or another external device. The exception process detection table may also be segmented and stored in multiple devices.

As shown in the figure, the exception process detection table stores for each detection pattern a pattern ID, an exception process detection pattern (event that triggers the surveillance data recording process), detection target requirement, the recording start time, and the recording time (imaging time). For example, because the detection target flag for pattern ID: a1 and pattern ID: a2 is "yes" in the example shown in the figure, an exception process is detected when transaction information indicating an exception process is acquired (pattern ID: a1), and when a receipt R is read by the receipt scanner 9 (pattern ID: a2). Note that pattern ID: a1 corresponds to the flow chart shown in FIG. 9, and pattern ID: a2 corresponds to the flow chart shown in FIG. 10.

In addition, because the recording start time and recording time are set according to the type of exception process when transaction information indicating an exception process is acquired, the recording start time and recording time separately determined according to the type of exception process are used. In addition, when a receipt R is read, the recording start time is 20 seconds before the receipt R was read, and surveillance data for a 60 second recording time is read from the sub-storage unit 84 and stored in the main storage unit 85.

Other exception process detection patterns such as operating a button on the receipt printer 2 (pattern ID: a3), operating a button a employee ID card 200 (pattern ID: a4), detecting placing a product or a receipt R on a weight sensor (not shown in the figure) (pattern ID: a5), detecting placing a product or receipt from image recognition (pattern ID: a6), detecting an exception process keyword by voice recognition (pattern ID: a7), not detecting a normal process keyword by voice recognition (pattern ID: a8), and detecting an LED turning off (pattern ID: a9).

As shown in FIG. 13A, pattern ID: a3 requires the receipt printer 2 having an operating unit 75 that can be operated by an employee or customer. The operating unit 75 is a device that is operated by an employee or customer when an exception process is detected, and the result of the operation is output to the exception process detection unit 72. Required components other than the operating unit 75 are the same as in FIG. 8, and further description thereof is omitted.
In addition, as shown in FIG. 13B, pattern ID: a4 requires that the employee ID card 200 carried by each employee has an employee ID storage unit 201, a wireless communication unit 202 for communicating wirelessly with the receipt printer 2, and an operating unit 203 that can be operated by the employee. The operating unit 203 is operated when it is detected than an exception process was started by the employee, and the operating result is sent with the employee ID read from the employee ID storage unit 201 through the wireless communication unit 202 to the exception process detection unit 72 of the receipt printer 2. If the received employee ID matches the operator of the receipt printer 2 (the checkout clerk), the exception process detection unit 72 detects that an exception process was started based on the operating result from the employee ID card 200.
By using pattern ID: a3 and pattern ID: a4 as detection targets, exception processes can be reliably detected even when execution of the exception process was delayed until later because the checkout registers are crowded.
In addition, because the employee ID is determined with pattern ID: a4, the receipt printer 2 will not erroneously receive the operating result from an employee ID card 200 at a neighboring checkout counter 7.

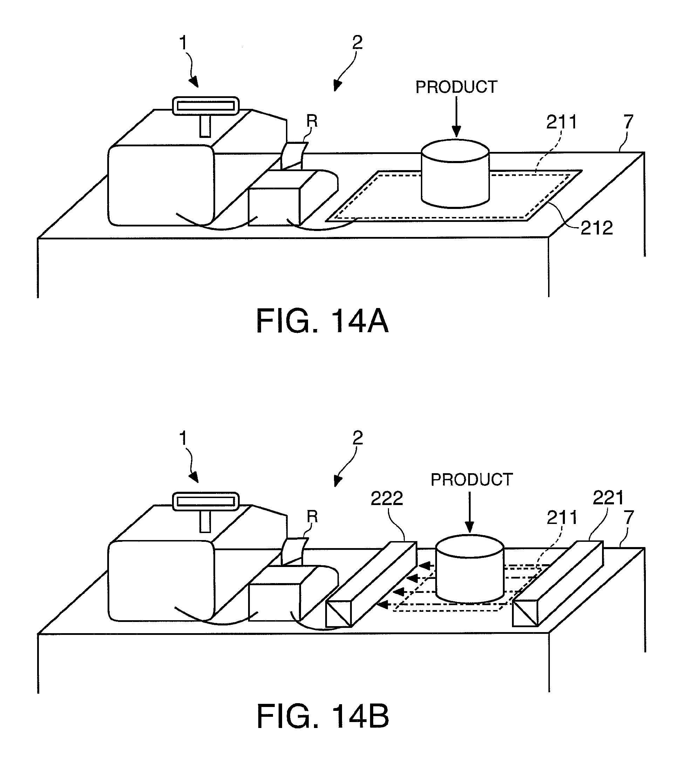

Pattern ID: a5 requires a configuration such as shown in FIG. 14A. More specifically, in addition to a POS terminal 1 and a receipt printer 2, a specific placement unit 211 on which products or receipts R are placed, and a weight sensor 212 (object detection unit) that detects if a product or receipt R was placed on the placement unit 211, are located at the checkout counter 7, and the receipt printer 2 is connected to the weight sensor 212.
The weight sensor 212 is a flat weight scale, and when a product or other object is placed thereon, the detection result is output to the exception process detection unit 72 of the receipt printer 2.
Although not shown in the figures, pattern ID: a6 requires a specific placement unit on which products or receipts R are placed, and a camera (for which an in-store surveillance camera 10 may be used) for determining if a product or receipt R was placed on the specific placement unit by means of image recognition that recognizes differences in before and after images. The detection result is acquired by the receipt printer 2.
By using pattern ID: a5 and pattern ID: a6 as detection targets, exception processes such as returning or exchanging a product, or canceling or correcting a receipt R, can be quickly detected.

Pattern ID: a7 and pattern ID: a8 require a microphone for capturing audio around the checkout counter 7 and a speech recognition unit (not shown in the figure) for recognizing the captured audio, and the receipt printer 2 must be able to acquire the speech recognition result.
By using pattern ID: a7 as a detection target, specific keywords that are spoken by a employee or customer when an exception process is executed (such as "...is wrong" or "I'd like to return...") can be recognized to quickly detect that an exception process was invoked.
By using pattern ID: a8, exception processes can be quickly detected from failure to recognize certain keywords (such as "Hi, how are you today?" ) that are spoken by the employee or customer during a normal process.

Pattern ID: a9 requires a configuration such as shown in FIG. 14B. More specifically, in addition to the POS terminal 1 and receipt printer 2, an LED emitter 221 that throws light beams that can be interrupted by a product, receipt R, or hand, and a photodetector 222 that detects the light from the LED emitter 221, are disposed at the checkout counter 7, and the receipt printer 2 is connected to the photodetector 222. When the photodetector 222 detects that light from the LED emitter 221 was interrupted by an object placed on the placement unit 211, the photodetector 222 outputs the result to the exception process detection unit 72 of the receipt printer 2. By using this pattern ID: a9 as a detection target, an exception process can be detected using a suitable means such as a product, receipt R, or hand.

Note that the content of the exception process detection table shown in FIG. 12 can be changed as needed by using the store management server 5, for example. More specifically, what detection patterns are used, and the recording start time and recording time of the surveillance data when an exception process is detected, can be changed as desired.

A specific activity detection table is described next with reference to FIG. 15. Note that this table is stored in the store management server 5. Note, further, that the content of the specific activity detection table can be changed as desired using the store management server 5 similarly to the exception process detection table described above.

As shown in the figure, the specific activity detection table stores for each detection pattern a pattern ID, the specific activity detection pattern (the event that triggers the surveillance data recording process), whether the pattern is applied as a detection target, the recording start time, and the recording time.
For example, because the detection target flag is set for pattern ID: b1 and pattern ID: b2, a specific activity is detected when a customer goes from the store entrance directly to a cash register (pattern ID: b1), and when there is a line at the checkout counter and a customer cuts in line (pattern ID: b2). Note that these events can be detected by using the in-store surveillance camera 10 for facial recognition of customers and tracking customer movements. More specifically, an activity area is detected by determining the difference between frames at a specific time interval in the surveillance data acquired from the in-store surveillance camera 10, and faces are detected in this activity area (whether there are parts where facial features can be detected). The parts where facial features are detected are determined to be a person, and the identified person can then be tracked. In addition, if there are plural RFID readers in the store, where a customer is in the store can be detected if the customer carries a member card with an embedded RFID tag.

Other specific activity detection patterns include a customer handing a product or receipt R to an employee (pattern ID: b3), an employee looking around (pattern ID: b4), or an employee going to the checkout counter 7 time and again (pattern ID: b5).

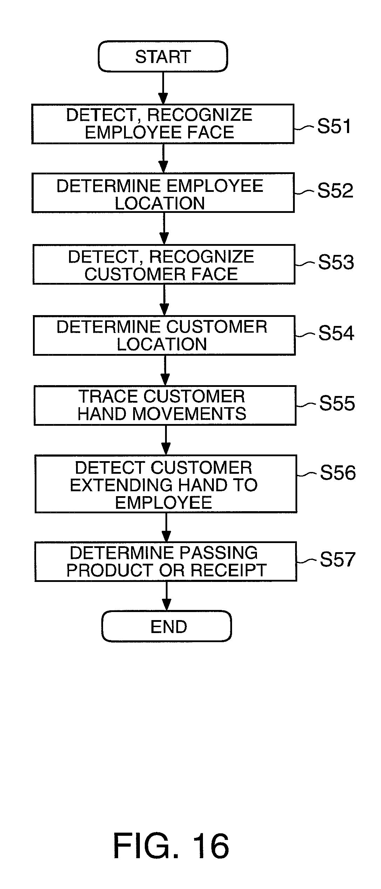

The detection process for pattern ID: b3 is described next with reference to the flow chart in FIG. 16.
The store management server 5 (specific activity detection unit 82) detects and recognizes an employee face from the surveillance images captured by the in-store surveillance camera 10 (S51), and determines the location of the employee (S52).
The store management server 5 also detects and recognizes a customer face from the surveillance images captured by the in-store surveillance camera 10 (S53), and determines the location of the customer (S54).
Movement of the customer's hands is then traced (S55), and when it is determined that the customer extended his hand to the employee (S56), it is determined that a product or receipt R was exchanged (S57).
By thus detecting the actions described by pattern ID: b3, actions by the employee and customer that are characteristic of an exception process can be detected as specific activities.
Similarly, pattern ID: b4 enables detecting an area of activity from the surveillance data captured by the in-store surveillance camera 10, detecting faces in the activity area, and by repeating this process enables detecting employee movements (changes in the position of the head). As a result, repeated changes in the position of the head (such as when looking at one's surroundings) are interpreted as surveying one's surroundings, and can be considered to indicate the possibility of fraudulent activity.

Pattern ID: b5 enables detecting from the in-store surveillance camera 10 focused on a checkout counter 7 if the same employee is detected repeatedly. As a result, unnatural activities such as moving to and from the checkout counter 7 repeatedly can be easily detected. Yet further, when a plurality of RFID readers are installed in the store, employee movements can be detected by requiring employees to wear an employee ID card 200 with an embedded RFID tag.

As described above, the information processing device A2 according to the second embodiment of the invention can prevent recording unnecessary surveillance data by detecting exception processes and recording surveillance data for a specified time referenced to when the exception process was detected. This enables recording only surveillance data that is effective as proof of fraudulent activity, and thereby enables detecting fraudulent activity efficiently. In addition, because a sub-storage unit 84 stores while constantly updating the surveillance data captured within a specified time when the in-store surveillance camera 10 is operating, surveillance data captured before an exception process was started can also be recorded. As a result, fraudulent activity for which surveillance data from before the exception process was invoked is considered important can also be reliably detected.

In addition to when an exception process is detected, surveillance data for a specified time referenced to when a specific activity is detected can also be recorded when a specific action of an employee or customer is detected. This enables the store manager, for example, to efficiently confirm fraudulent activity.

Convenience is also good because the exception process and specific activity detection patterns that trigger the surveillance data recording process can be customized for a particular store. Convenience is further improved because the recording start time and recording time can also be set according to the detection pattern.

The exception process detection unit 72 in the foregoing embodiment detects the occurrence of an exception process by acquiring transaction information containing information indicating an exception process by means of the transaction information acquisition unit 71. However, when the receipt printer 2 can detect specific key operations on the POS terminal 1 that trigger an exception process, such as pressing a cancel key, the occurrence of an exception process can be detected by confirming the key operation.

The information processing device A2 in the foregoing embodiment is rendered by the receipt printer 2, receipt scanner 9, and store management server 5, but a configuration omitting the store management server 5 is also conceivable. In this configuration the parts of the store management server 5 are rendered in the receipt printer 2. Configurations in which parts of the information processing device A2 are rendered in the POS terminal 1 , and configurations in which the storage unit 80 is disposed externally to the information processing device A2, are also conceivable.

The foregoing embodiment of the invention records the imaging results from the in-store surveillance camera 10 as the surveillance data, but if employees and/or customers are surveilled using an RFID reader, the information captured from a plurality of RFID readers deployed in the store may be recorded as the surveillance data. Furthermore, if employees and/or customers are surveilled using GPS, the GPS data (employee and/or customer location information) can be recorded as the surveillance data.

Resaving transaction process information using the result of reading a receipt R is described by way of example in the foregoing embodiment (see FIG. 10), but when performing the same operation twice is detected as an exception process, a configuration that restores the current state before the operating error occurred based on the information already stored in a transaction process buffer not shown when a specific button disposed to the receipt printer 2 is pressed is also conceivable. Note that twice hitting the same key can be automatically detected on the receipt printer 2 by detecting the same product data twice, or by detecting an employee operating an operating unit not shown. In this situation, the employee can correct the error and finish the transaction process correctly by deleting the duplicate product on the POS terminal 1 side.

### Embodiment 3

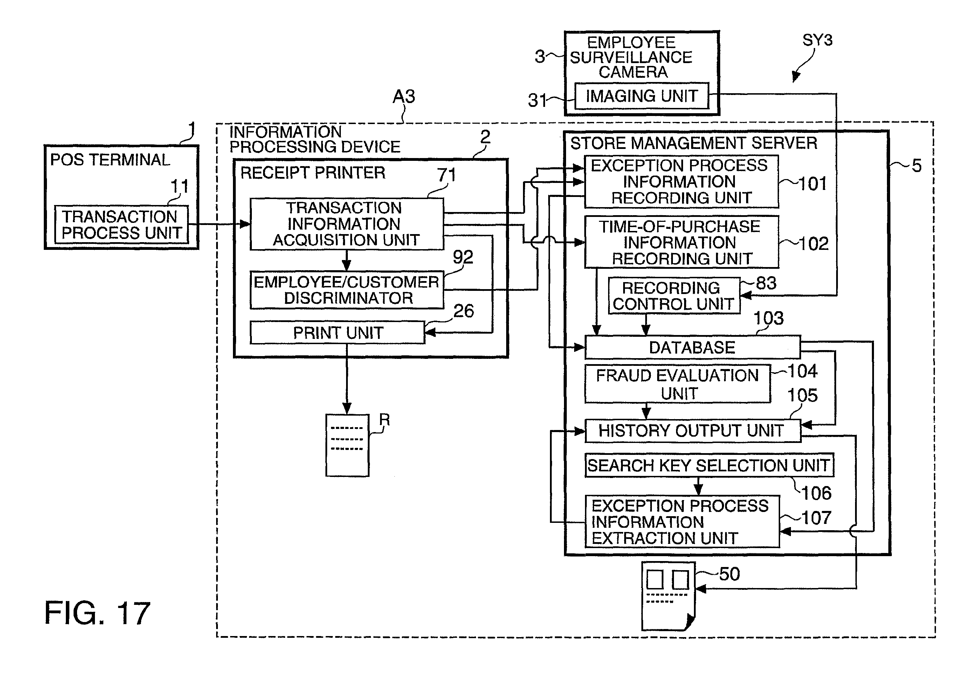

A third embodiment of the invention is described next with reference to FIG. 17 to FIG. 22. This embodiment of the invention creates summary reports 50 that enable easily and quickly determining fraudulent activity by an employee and/or customer.
Note that like parts in this and the foregoing embodiments are identified by like reference numerals, and further description thereof is omitted. In addition, modifications that are applicable to the same components in the foregoing embodiments can also be applied to this embodiment.

FIG. 17 is a function block diagram of the store surveillance system SY3 according to the third embodiment of the invention. The store surveillance system SY3 according to this embodiment of the invention includes a POS terminal 1 , a receipt printer 2, an employee surveillance camera 3 that monitors employees, and a store management server 5 that controls the store surveillance system SY3.
As in the foregoing embodiments, the POS terminal 1 and receipt printer 2 are communicably connected by a serial interface. Imaging results from the employee surveillance camera 3 are transmitted to the store management server 5 over an in-house LAN 6 (see FIG. 1). Note that in this embodiment of the invention the information processing device A3 (information processing system) is rendered by the receipt printer 2 and store management server 5 as indicated by the dotted line.

The main functional part of the POS terminal 1 is the transaction process unit 11.
The main functional part of the employee surveillance camera 3 is the imaging unit 31. As in the first embodiment, the imaging unit 31 is located near the checkout counter 7 and records employees, customers, and products at the checkout counter 7. The imaging unit 31 is normally on, and the output imaging results are stored in a database 103 described below. During a transaction process (both exception processes and when processing purchase transactions), the imaging results captured during the transaction process (images for a specified time before and/or after the time of the transaction process) are stored in the database 103 related to the transaction data of the transaction process. The imaging unit 31 can capture both video and still images. The imaging unit 31 may also record only video, and single frames can be extracted from the video and used as still pictures.

The main functional parts of the receipt printer 2 are the transaction information acquisition unit 71, employee/customer discriminator 92, and print unit 26. The transaction information acquisition unit 71 acquires transaction information from the POS terminal 1 (transaction process unit 11).

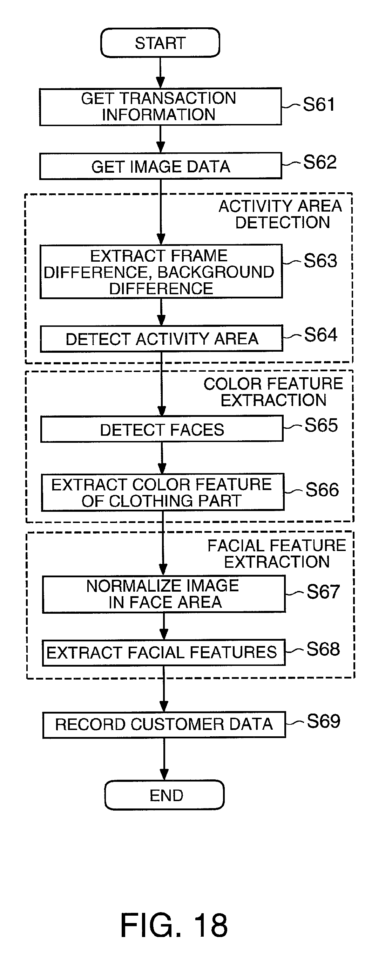

The employee/customer discriminator 92 identifies at least one of the employee operating the POS terminal 1 and the customer involved with the transaction process. Employees and/or customers are identified based on an employee ID or customer ID contained in the acquired transaction information. Note that if the employees each carry an employee ID card 200 (see FIG. 13B), and if customers have a member card, employees and/or customers can be identified from the output of an RFID reader.
A facial recognition process using the imaging results from the in-store surveillance camera 10 could also be used to identify employees and/or customers based on the result. Note that facial recognition enables determining if a subject is the same person recorded in a facial recognition database (a database (not shown in the figure) storing facial features for employees and customers). Extracting facial features is described below with reference to FIG. 18.

The print unit 26 prints the transaction information acquired by the transaction information acquisition unit 71 to receipt paper and issues a receipt R.

The main functional parts of the store management server 5 are an exception process information recording unit 101, time-of-purchase information recording unit 102, database 103, fraudulence evaluation unit 104, history output unit 105, search key selection unit 106 and exception process information extraction unit 107.

When information indicating an exception process is contained in the transaction information acquired by the transaction information acquisition unit 71 (when the converted data acquired from the receipt printer 2 is exception process information), the exception process information recording unit 101 generates and stores in the database 103 exception process-related information including the employee ID of the employee or the customer ID of the customer identified by the employee/customer discriminator 92, and specific parameters (including transaction data) including the type of exception process. That is, the exception process information recording unit 101 generates and records exception process-related information in the database 103 only when an exception process occurs.

The time-of-purchase information recording unit 102 records time-of-purchase information (information based on the converted data acquired at the time of product purchase, equivalent to transaction data), which is transaction information acquired by the transaction information acquisition unit 71 at the time of product purchase, in the database 103. Note that the display data presented on the customer display 4 during a single transaction process may be recorded as the time-of-purchase information.

The recording control unit 83 can be made to function the same way as in the second embodiment. More specifically, image data for a specified period of time is stored while being constantly updated in the sub-storage unit 84 (buffer) not shown, and part of the image data recorded in the sub-storage unit 84 can be read by the recording control unit 83 and recorded in the database 103, which is comparable to the main storage unit 85. Note that when a person is contained in the imaging result from the imaging unit 31, the recording control unit 83 in this embodiment of the invention additionally records customer data (a color characteristic or facial characteristic) acquired from the imaging result in the database 103. Extracting color characteristics and facial characteristics is described with reference to FIG. 18.

As described above, the database 103 stores the exception process-related information related to the imaging results from the imaging unit 31 during the exception process, and stores the time-of-purchase information related to the imaging results of the imaging unit 31 at the time of purchase.

The fraudulence evaluation unit 104 determines if there is the possibility of fraudulence on the part of either an employee or customer based on the surveillance data from the imaging unit 31. For example, the fraudulence evaluation unit 104 determines there is the possibility of fraudulent activity by an employee when pattern ID: b4 (an employee is observed to be looking around furtively) or pattern ID: b5 (an employee moves to and from the checkout counter frequently) is detected from among the specific activity detection patterns described in the second embodiment. The possibility of fraudulent activity by a customer is determined when, for example, a customer leaves with a product without going through a checkout counter 7.

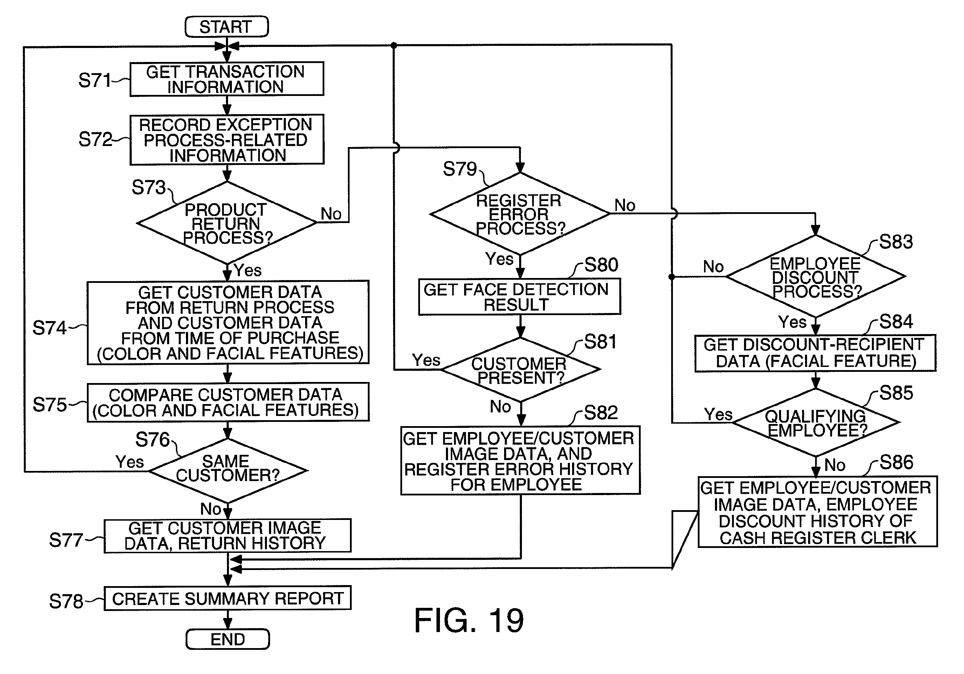

The fraudulence evaluation unit 104 also determines there is a possibility of fraudulent activity when the customer returning a product and the customer that purchased the product are not the same person; when there a customer is not at the checkout counter 7 during a transaction process; and when the customer for whom a specific discount process is executed is not one of the specific people (such as an employee) that qualify for the specific discount. The decision process that applies to these situations is described below with reference to FIG. 19.

When information indicating an exception process is contained in the transaction information acquired by the transaction information acquisition unit 71 (the converted data acquired from the receipt printer 2), and the fraudulence evaluation unit 104 determines there is the possibility of fraud, the history output unit 105 collects the exception process-related information for that employee or customer and outputs a summary report 50. When a search key is specified by the search key selection unit 106 described below, the history output unit 105 also outputs a summary report 50. The output method in this embodiment of the invention is printed output, e-mail or notifying an administrator (such as the store manager) using a web application. As described in further detail below, the imaging result from the imaging unit 31 related to the exception process-related information may also be printed or displayed in the summary report 50.

The search key selection unit 106 is a means for setting the search key for outputting a summary report 50, and conceptually includes an operating means such as a keyboard or mouse. The search key may be any information that can be identified from the exception process-related information or information that can be identified from the imaging results of the imaging unit 31 (including the tag information described in the second embodiment), including an employee ID, customer ID, type of exception process, date and time of the exception process, exception process number, products handled in the exception process, the presence of customers at the checkout counter 7, the employee location, and audio data and video data from inside the store around the checkout counter 7.

The exception process information extraction unit 107 extracts the exception process-related information matching the search key set by the search key selection unit 106 from the database 103. If plural search parameters are specified, such as the employee ID and customer ID, the exception process-related information is extracted by applying an AND or OR condition. The history output unit 105 compiles the exception process-related information extracted from the exception process information extraction unit 107 and outputs the history.

The data recording process of the information processing device A3 is described next with reference to the flow chart in FIG. 18. Note that this process records customer data (such as color feature or facial feature) needed to determine if the customer returning a product is the same as the customer that purchased the product.

When the receipt printer 2 acquires transaction information (S61, transaction information acquisition unit 71 ), the store management server 5 acquires the image data from the in-store surveillance camera 10 (S62). The recording control unit 83 then extracts the frame difference and background difference (S63), and detects the activity area from the extracted result (S64). Faces are also detected in the detected activity area (S65), and a color feature of the clothing is extracted (S66). The image in the area where a face was detected is then normalized (S67), and facial features are extracted (S68). The extracted color features and facial features are then stored as customer data in the database 103 with the imaging result (S69).

Note that the facial features information is also used to determine if the customer in a special discount process is a specific person that qualifies for the special discount. These facial features can be calculated in advance from facial images (photographs) of the specific qualifying people and stored in a facial feature database not shown. Note that in this embodiment of the invention employees are the specific qualifying people used for determining fraud when an employee discount process is executed.

The summary report compiling process of the information processing device A3 is described next with reference to the flow chart in FIG. 19. This process produces the summary report 50 that is output when determining the possibility of fraud by an employee or customer. As described above, because a summary report 50 is output when an exception process executes and the possibility of fraud by an employee or customer is determined, information indicating an exception process must be contained in the transaction information that triggers the process.

When the receipt printer 2 acquires transaction information (S71, transaction information acquisition unit 71 ), the store management server 5 generates and records exception process-related information in the database 103 (S72, exception process information recording unit 101). The fraudulence evaluation unit 104 also determines the type of exception process as described below, and determines the possibility of fraud according to the type of exception process.

For example, if the type of exception process is a product return (S73 returns Yes), the customer data during the product return process (color feature and facial feature) and the customer data from the time of purchase (color feature and facial feature) are acquired from the database 103 (S74) and compared (S75). As a result, whether or not the customer returning the product and the customer that purchased the product are the same is determined (S76), and if they are the same person (S76 returns Yes), it is determined that there is no possibility of fraud and the process ends. However, if they are not the same person (S76 returns No), there is the possibility of fraud and the history output unit 105 acquires from the database 103 image data and exception process-related information (return history) for that customer (S77), a summary report 50 is produced (S78).

If the type of exception process is a cash register error (S79 returns Yes), the fraudulence evaluation unit 104 gets the results of face detection based on the image data from the in-store surveillance camera 10 (S80), and determines if there is a customer in front of the checkout counter 7 (S81). If a customer is present (S81 returns Yes), the fraudulence evaluation unit 104 determines that fraudulent activity is not likely and ends the process. However, if a customer is not there (S81 returns No), the fraudulence evaluation unit 104 determines there is the possibility of fraudulent activity, retrieves image data for the employee and customer and the history of register errors by the employee from the database 103 by means of the history output unit 105 (S82), and produces a summary report 50 (S78).

If the type of exception process is an employee discount (S83 returns Yes), the fraudulence evaluation unit 104 retrieves discount recipient data (facial feature) from the facial feature database (S84), and determines if the customer is a qualifying employee (S85). If a qualifying employee is identified (S85 returns Yes), the fraudulence evaluation unit 104 determines that fraudulent activity is not likely and ends the process. If an employee is not identified (S85 returns No), the fraudulence evaluation unit 104 determines there is the possibility of fraudulent activity, retrieves image data for the employee and customer and the history of previously taken employee discounts from the database 103 by means of the history output unit 105 (S86), and produces a summary report 50 (S78).

The content of the summary report 50 is described next with reference to FIG. 20 to FIG. 22. FIG. 20 shows an example of a summary report 50a output when the possibility of fraud is identified in a product return process.
In this situation the summary report 50a includes, in addition to the date and time of the report and a report number, a facial image 121 (still image) of the customer returning the product, a facial image 122 (still image) of the customer at the time of purchase, a barcode 123 for playing a video image, a product return summary 124, a summary of previous returns 125 by the same customer, and a description of the video link 126.

In this example a facial image 122 of the customer at the time of purchase is not displayed. This means that information for the receipt R presented for the return is not in the database 103. This can occur, for example, when the product was purchased at a different store or when a product is returned using a forged receipt R. As a result, the administrator reading the summary report 50a can determine that there is the possibility of a fraudulent return (improper return).

The barcode 123 is for reviewing the imaging result of the imaging unit 31 when the return was made, and as described in the description of the video link 126, by scanning the barcode 123 with a barcode reader not shown, video of the return process can be displayed on a display not shown.

The product return summary 124 is information retrieved from the exception process-related information stored in the database 103, and includes the time of the return (date and time of the exception process), transaction number, returned items (product names of the items being returned), the refund amount (the transaction amount of the exception process), the employee processing the return (the name of the employee handling the product return process determined from the exception process-related information or imaging result), and whether there is a corresponding purchase history (whether or not transaction data of the same content as the content recorded on the receipt R present for the return is stored in the database 103).

The summary of previous returns 125 by the same customer includes the number of times the customer has returned products in the past (such as in the past year), a list and ratio of the returned products, and the number of times and the ratio of returns processed by the employee that is handling the return for the customer. Based on this information, the administrator can determine the frequency of returns, identify similarities in the returned products, and decide if the customer and employee colluded in fraudulent returns. For example, if as shown in the example in the figure they same employee is always working the cash register when a return is made, it can be determined that the customer and employee colluded in fraudulent returns.

Alternatively, the administrator can determine that the possibility of a fraudulent return is low if a facial image 122 of the customer at the time of purchase is displayed (if there is a corresponding purchase record), or if the names of plural employees are displayed as the cash register clerks for returns by the same customer, on the summary report 50a shown in FIG. 20.

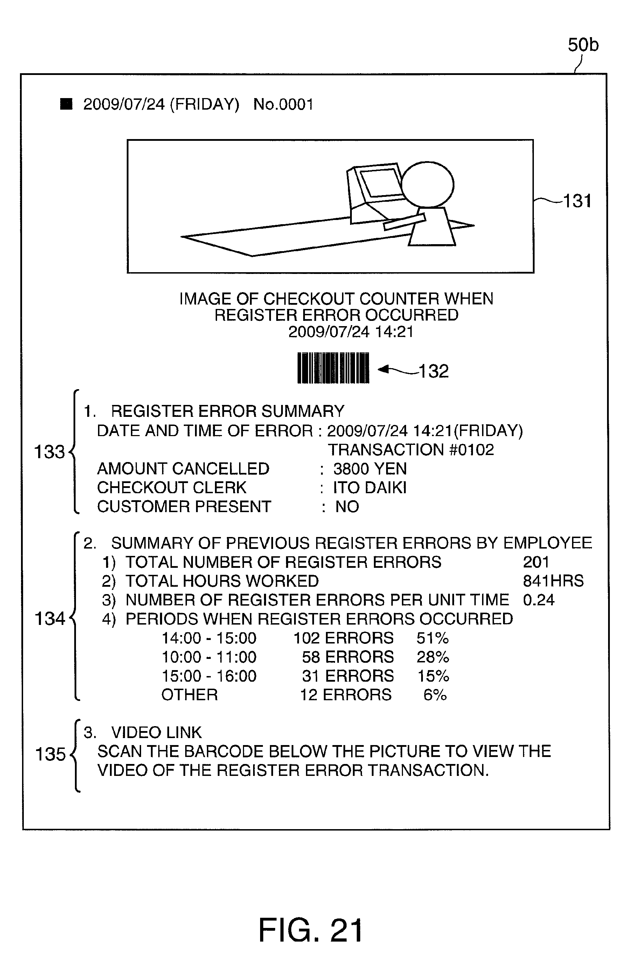

FIG. 21 shows an example of a summary report 50b that is output when a possibility of fraudulent activity is detected in a cash register error process.
In this situation the summary report 50b includes, in addition to the date and time of the report and a report number, an image 131 (still image) of the area around the checkout counter 7 when the error occurred, a barcode 132 for playing the video image, a register error summary 133, a summary of previous register errors 134 by the same employee, and a description of the video link 135. The barcode 132 is for reviewing the imaging result (video) captured by the imaging unit 31 when the register error occurred as described in the description of the video link 135.

The register error summary 133 is information retrieved from the exception process-related information stored in the database 103, and includes the time the register error occurred (date and time of the exception process), transaction number, cancelled amount (transaction amount of the exception process), the employee operating the register when the register error occurred (the name of the employee handling the product return process determined from the exception process-related information or imaging result), and whether or not a customer is present (whether or not a customer was at the checkout counter 7 when the register error occurred). In the example shown in the figure, a customer is not present, this can be confirmed from the image 131 of the checkout counter 7 when the register error occurred, and that there is a possibility of fraud can be determined.

The summary of previous register errors 134 by the employee includes, for example, the total number of errors in the past (such as the past year), the total number of hours worked by the employee in the same period (information acquired from a time management database not shown), the number of register errors per unit time (such as one hour), and the percentage of errors made in specific time periods.
From this information the administrator can determine how many errors are made by the employee and during what times the number of errors is high, and can use this information for employee training. The administrator can also determine that there is the possibility of fraudulent errors if the number of register errors is when the subject customer is present is clearly higher than the number of register errors when the customer is not present, or if the occurrence of register errors is biased to a particular time period.

Alternatively, if in the summary report 50b shown in FIG. 21 a customer is included in the image 131 of the area around the checkout counter 7 when a register error occurs (a subject customer is present), or if there is no bias in the number of register errors whether or not a customer is present, the administrator can determine that the possibility of fraudulent register errors is low.

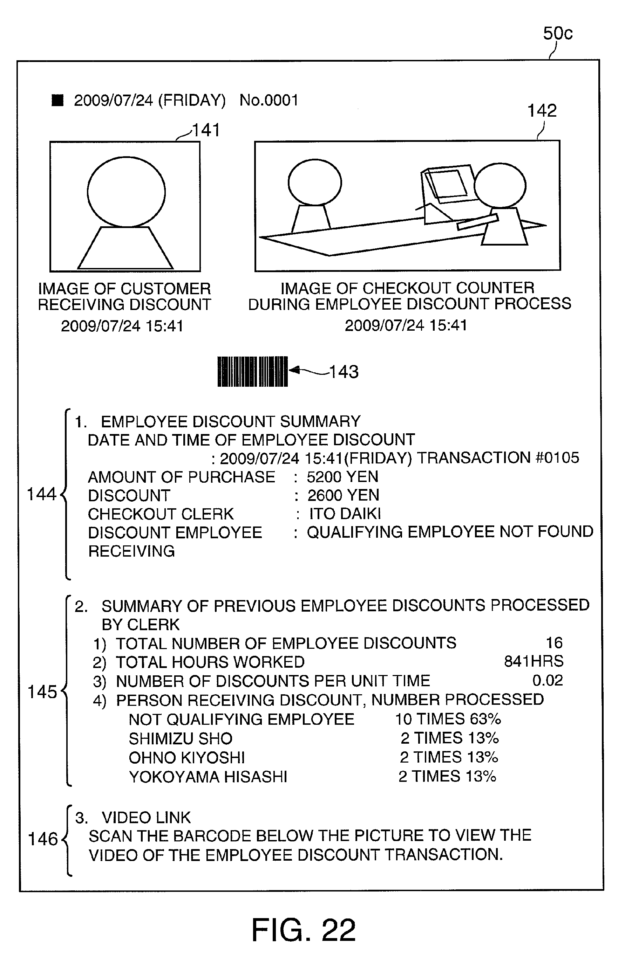

FIG. 22 shows an example of a summary report 50c that is output when the possibility of fraud is detected in an employee discount process.
In this situation the summary report 50c includes, in addition to the date and time of the report and a report number, a facial image 141 (still image) of the customer when an employee discount is applied, an image 142 (still image) of the checkout counter 7 area when an employee discount is applied, a barcode 143 for playing a video image of the transaction when an employee discount is applied, an employee discount summary 144, a summary of previous employee discounts 145 received by the employee, and a description of the video link 146. Note that the barcode 143 and description of the video link 146 are the same as in the examples shown in FIG. 20 and FIG. 21, and further description thereof is omitted.

The employee discount summary 144 is information retrieved from the exception process-related information stored in the database 103, and includes the time the employee discount was processed (date and time of the exception process), transaction number, purchase amount, discount amount, the employee operating the register when the employee discount was processed (the name of the employee processing the employee discount determined from the exception process-related information or imaging result), and the subject employee (the name of the employee if an employee with the same facial features is identified). Note that in this example the difference of the purchase amount minus the discount amount is the transaction amount of the exception process. In addition, because the subject employee is shown as not found in this example, it can be determined that there is the possibility of a fraudulent employee discount.

The summary of previous employee discounts 145 for the checkout clerk includes the total number of employee discounts taken by the employee in the past (such as the previous year), the total number of hours worked by the employee in the same period (information acquired from a time management database not shown), the number of employee discounts per unit time, and the number of employee discounts processed by the employee (the names of the employees receiving an employee discount and the percentage of total discounts processed). From this information the administrator can determine how many employee discounts have been processed by the employee operating the cash register, and for whom the employee discounts were processed. As a result, the administrator can determine there is the possibility of fraudulent employee discounts if the number of employee discounts processed per unit time is extremely high, or the employee has processed an unusually large number of discounts.

Alternatively, if the number of employee discounts processed per unit time is low, or the employee has not processed an unusual number of discounts, the administrator can determine that the possibility of fraudulent register errors is low.

As also described above, the administrator can also output the summary reports 50 shown in FIG. 20 to FIG. 22 at the desired time by specifying the search keys using the search key selection unit 106. For example, by specifying the exception process number (transaction number) as the search key, a summary report 50 (50a, 50b, or 50c) can be output according to the type of exception process. In addition, by specifying an employee ID and type of exception process (with an AND condition) the summary of previous register errors 134 by a particular employee (see FIG. 21) or summary of previous employee discounts 145 by a particular employee (see FIG. 22) can be output as the summary report 50.

Yet further, by specifying the presence of a customer at the checkout counter 7 as the search key, a summary report 50 containing a list of exception processes in which there a customer is not present (preferably sorted by employee or type of exception process) can also be output.
By specifying employee location as the search key, a summary report 50 containing a list of exception processes in which an employee was at a specified position (such as a specified checkout counter) (preferably sorted by employee, customer, or type of exception process) can also be output.
The administrator can thus output the required summary report 50 at the required time by specifying the search key.

As described above, because the information processing device A3 according to the third embodiment of the invention records exception process-related information containing employee ID, customer ID, and specific items related to exception processes (transaction data) in a database 103, and can output a summary report 50 tabulating the exception process-related information by employee ID or customer ID, fraudulent activity by an employee or customer can be easily and quickly determined from the summary report. More specifically, based on the output summary report 50, the administrator can check what type and the number of exception processes the employee or customer has been involved with in the past, and can determine whether there was fraudulent or improper activity.

In addition, if the possibility of fraud is determined from the employee or customer surveillance results, the administrator can output a summary report 50 without performing any special operation. More specifically, because the administrator does not need to actively execute a search process, the effort needed to check for fraudulent or improper activity can be greatly reduced. In addition, because the possibility of fraud is determined objectively, the presence of fraudulent or improper activity can be reliably determined independently of the subjectivity and effort of the administrator.

Furthermore, because the summary report 50 can be sent to a predetermined administrator by e-mail or using a web application, historical information can be sent regardless of where the administrator is. Yet further, because the imaging results from the imaging unit 31 at the time of the transaction process (the time of purchase or exception process) are output with the historical information extracted from the exception process-related information in the summary report 50, the administrator can use the imaging results to verify fraudulent or improper activity.

In addition, the administrator can check the behavior of the employee or customer at the time of product purchase and when determining fraudulent or improper activity using both still pictures and video from the summary report 50, and can therefore more accurately evaluate events at the checkout counter 7. Furthermore, because the video can be reproduced by reading a barcode 123, 132, 143, the store manager or other person can quickly check the video.

The foregoing embodiment describes printing out the summary report 50, but if the historical information is output as a web page, for example, an icon linked to the video can be displayed instead of a barcode 123, 132, 143.

The summary report 50 is printed out from a report printer 8 connected to the store management server 5 in this embodiment of the invention, but the summary report 50 may be printed using the receipt printer 2. In addition, when the summary report 50 relates to fraud by an employee, the summary report 50 can be output from a receipt printer 2 (connected to the in-house LAN 6) other than the receipt printer 2 located at the checkout counter 7 where fraud was detected. When the possibility of fraud is detected in this configuration, fraudulent or improper activity by an employee or customer can be checked in real-time in the store.

Furthermore, the possibility of fraud is determined conditionally upon a customer not being present during the exception process when the type of exception process is a register error in this embodiment of the invention, but the same condition can be applied to other exception processes such as product return processes, making change, discount processes, and markdown processes.

Yet further, the occurrence of an exception process is detected when information indicating an exception process is contained in the transaction information in this embodiment of the invention, but as described in the second embodiment, exception processes can also be detected based on reading a receipt R, an employee or customer operating a specific operating unit, or a product or receipt R being placed on a specific placement unit.

The information processing device A3 in this embodiment of the invention is rendered by a receipt printer 2 and store management server 5, but a configuration omitting the store management server 5 is also conceivable. In this configuration the parts of the store management server 5 are rendered in the receipt printer 2. Configurations in which parts of the information processing device A3 are rendered in the POS terminal 1 , and configurations in which the database 103 is disposed externally to the information processing device A3, are also conceivable.

The first to third embodiments described above enable detecting on the receipt printer 2 side when an exception process has occurred, and by recording surveillance data referenced to when the exception process was detected can efficiently record surveillance data that is useful for verifying fraudulent or improper activity by a employee or customer. In addition, by tabulating and outputting specific items related to the exception process by employee and/or customer with the imaging results from the employee surveillance camera 3 as a summary report 50, the administrator can easily and quickly determine if there was fraudulent or improper activity.

The steps of the control methods (the flow charts of the embodiments described above) of the store surveillance systems SY1 to SY3 according to the foregoing embodiments of the invention can also be provided as a program. The program can also be provided stored on a recording medium such as a CD-ROM or flash memory. Yet more specifically, a program that causes a computer to function as the components of the receipt printer 2 and information processing device A2, A3, and a recording medium storing the program, are also included in the scope of the invention.

Yet further, the information processing device of the invention is rendered by a receipt printer 2 and store management server 5 in the embodiments described above, but can be rendered by other electronic devices. The invention can also be used for applications other than detecting fraudulent or improper activity by employees and customers. It will be obvious to one with ordinary skill in the related art that that the configurations and process steps of the store surveillance systems SY1 to SY3 can be changed and modified in many ways without departing from the scope of the accompanying claims.
Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. An information processing device comprising:
an output data acquisition unit (21) adapted to acquire output data output from a POS terminal (1);
an operation evaluation unit (22) adapted to determine the POS terminal operation based on the acquired output data;
a data conversion unit (23) adapted to convert the result of the operation evaluation unit (22) to data in a specific format that can be interpreted by an external device (5); and
a converted data output unit (24) adapted to output the converted data converted by the data conversion unit (23) to the external device (5).

2. The information processing device described in claim 1 , wherein the operation evaluation unit (22) is adapted to reference a conversion table (66) that can be rewritten according to the POS terminal specification to determine the POS terminal operation.

3. The information processing device described in claim 1 or 2, wherein:
at least some of the output data is print data for issuing a receipt; and
the information processing device also has a print unit (26) for printing the print data on paper.

4. The information processing device described in any one of claims 1 to 3, wherein:
at least some of the output data is display data for a customer display (4); and
the information processing device also has a display data output unit adapted to output the display data on the customer display (4).

5. The information processing device described in claim 1 , wherein:
the operation evaluation unit (22) is adapted to determine if the POS terminal operation is an operation for executing an exception process of a transaction process; and
the converted data output unit (24) is adapted to output exception process information related to the exception process as the converted data when the operation evaluation unit (22) determines that the POS terminal operation was an operation for executing an exception process.

6. The information processing device described in claim 5, further comprising:
an imaging result acquisition unit (25) that is adapted to acquire imaging results from an imaging device (3, 31, 32) for imaging a checkout counter area where the POS terminal (1 ) is installed;
wherein the converted data output unit (24) is adapted to output imaging results from the imaging device (3, 31, 32) captured during a specified time before and/or after the decision by the operation evaluation unit (22) when the operation evaluation unit (22) determines that the POS terminal operation was an operation for executing an exception process.

7. The information processing device described in claim 6, wherein:
the operation evaluation unit (22) is adapted to determine the exception process type;
wherein said specified time is determined according to the exception process type.

8. The information processing device described in claim 6, wherein:
the operation evaluation unit (22) is adapted to determine the transaction amount of the exception process;
wherein said specified time is determined according to the transaction amount of the exception process.

9. The information processing device described in claim 6, wherein the external device (5) has a database(51 ) that relationally stores the exception process information and the imaging results from the imaging device (3, 31, 32).

10. Use of the information processing device of any one of claims 1 to 9 in an information processing system comprising the information processing device and an external device (5), wherein:
the operation evaluation unit (22) includes an employee/customer determination unit that is adapted to evaluate at least one of an employee operating the POS terminal (1 ) and a customer of a transaction process of the POS terminal (1); and
the external device (5) includes
an exception process-related information recording unit (101) that is adapted to generate and record in a database (103) exception process-related information that relates an employee ID of the employee or a customer ID of the customer evaluated by the employee/customer determination unit and specific parameters including the exception process type when information indicating an exception process of the transaction process is contained in the converted data acquired from the information processing device, and
a history information output unit (105) that is adapted to summarize and output the exception process-related information stored in the database by employee ID or customer ID as history information.

11. The use described in claim 10, wherein:
the external device (5) further comprises
a search key specification unit (106) that is adapted to specify as a search key at least one of the employee ID, the customer ID, the exception process type, a date and time of the exception process, an exception process number, a product processed in the exception process, the presence of a customer at the checkout counter where the POS terminal (1 ) is located, and employee location, and
an exception process-related information extraction unit (107) that is adapted to extract from the database (103) the exception process-related information matching the specified search key; and
the history information output unit (105) is adapted to summarize the exception process-related information extracted by the exception process-related information extraction unit (107) and output the history information.

12. The use described in claim 10, wherein:
the external device (5) also has a fraud evaluation unit (104) that is adapted to determine the possibility of fraud by at least one of the employee and the customer based on surveillance results from a surveillance unit that is adapted to monitor at least one of the employee and the customer; and
the history information output unit (105) is adapted to summarize the exception process-related information of the subject employee or customer and output history information when information indicating an exception process is contained in the acquired converted data and the fraud evaluation unit (104) determines there is a possibility of fraud.

13. The use described in claim 10, wherein the history information output unit (105) is adapted to send the history information to a predetermined administrator using e-mail or a web application.

14. The use described in claim 12, wherein:
the surveillance unit includes an imaging unit (31,32) that is adapted to image at least one of the employee and the customer; and
the history information output unit (105) is adapted to output the imaging result of the imaging unit (31, 32) at the time fraud was detected by the fraud evaluation unit (104) with the history information.

15. The use described in claim 14, wherein:
the external device (5) also has
a time-of-purchase information recording unit (102) that is adapted to record time-of-purchase information based on the converted data acquired at the time of product purchase related to the imaging result of the imaging unit (31, 32) at the time of purchase in the database; and
the history information output unit (105) is adapted to output with the history information the imaging result of the imaging unit (31 , 32) at the time the product subject to the exception process was purchased.

16. The use described in claim 15, wherein:
when the type of exception process is a product return process for returning a product,
the fraud evaluation unit (104) is adapted to reference the imaging result of the imaging unit (31,32) or the exception process-related information during the product return process, and the imaging result of the imaging unit (31,32) or the time-of-purchase information from when the product subject to the return process was purchased, and to determine there is a possibility of fraud when the customer of the return process and the customer at the time of purchase are not the same person.

17. The use described in claim 12, wherein the fraud evaluation unit (104) is adapted to determine there is a possibility of fraud when the presence of a customer is evaluated from the surveillance results of the surveillance unit during the exception process and a customer is not present.

18. The use described in claim 12, wherein:
when the type of exception process is a special discount process that discounts products for specific people,
the fraud evaluation unit (104) is adapted to determine if the customer is one of said specific people based on the surveillance result during the special discount process, and to determine there is a possibility of fraud when the customer is not one of said specific people.

19. A control method for an information processing device that is used connected to a POS terminal (1) and an external device (5), comprising as steps executed by the information processing device:
an output data acquisition step that acquires output data output from a POS terminal (1);
an operation evaluation step that determines the POS terminal operation based on the acquired output data;
a data conversion step that converts the result of the operation evaluation step to data in a specific format that can be interpreted by the external device (5); and
a converted data output step that outputs the converted data converted by the data conversion step to the external device (5).

20. A program for causing a computer to execute the steps of the information processing device control method described in claim 19.
